# EUROPEAN PATENT SPECIFICATION

(11) **EP 2 365 309 B1**
(45) Date of publication and mention of the grant of the patent: **19.08.2015**
(21) Application number: 11157561.9
(22) Date of filing: 09.03.2011
(51) Int. Cl.: B67B 3/26, G01M 3/40

(54) **Method for controlling the sealing of a cap on a container and apparatus for controlling the above-mentioned sealing**
Verfahren zur Kontrolle der Dichtung eines Deckels und Vorrichtung zur Kontrolle besagter Dichtung
Procédé de contrôle de l'étanchéité d'un capuchon de récipient et appareil de contrôle de l'étanchéité susmentionnée

(30) Priority: 09.03.2010 IT PD20100072
(43) Date of publication of application: 14.09.2011
(73) Proprietor: Convel S.r.l., 36031 Dueville (VI) (IT)
(72) Inventor: Gallo, Andrea, I-36030, Costabissara (VI) (IT); Lovato, Giovanni, I-36010, Monticello Conte Otto (VI) (IT)
(74) Representative: Gallo, Luca

(56) References cited:
- JP-A- 2002 148 241
- JP-A- 2006 337 064
- US-A- 5 760 295
- US-A1- 2006 042 357
- US-B1- 6 288 554

## Description

### Field of application

The present invention refers to a method for controlling the sealing of a cap on a container and to an apparatus for controlling the above-mentioned sealing, according to the preamble of the respective independent claims.

The method and the apparatus in question can be advantageously used in the industrial processes and plants for bottling products for human consumption, in particular in aseptic, such as mineral water, fruit juices and beverages in general, to verify the correct sealing of the caps on the openings of the containers.

### State of the art

Bottling lines for products for human consumption, such as water, juices, etc, i.e. of beverages in general, conventionally provide for the preservation of the products within the containers by using preservative products.

Usually, the products are heated up to pasteurization to determine a considerable reduction of the microbial loads within the product to be bottled and of the container with which the product is at contact, and thus improve the preservation of the product.

Such bottling lines have the drawback of subjecting to pasteurization heating the products to be bottled, which can thus modify the organoleptic characteristics thereof losing part of the taste and/or part of the valuable thermolabile human consumption substances.

The use of preservatives for preservation is also less and less accepted by the market which prefers products without preservatives whether natural or chemical.

In order to overcome these drawbacks there have been recently introduced the so-called aseptic bottling lines through which products for human consumption can be bottled in sterile conditions in containers of desired size and shapes without requiring subjecting the products to pasteurization operations and without requiring using preservatives.

In the aseptic bottling sector there arises the particular need of verifying the maintenance of the aseptic conditions as well as including, in case of absence of the latter, the reasons that lead to the loss of such conditions. In particular it is important, in order to timely restore the lost aseptic conditions, to comprise if the loss of such conditions is due to an insufficient sealing of the caps on the containers i.e. environmental contaminations during the bottling process.

Different methods and apparatus for controlling the sealing of the caps on the containers are known. Such controls are generally carried out on samples by means of tests, mainly destructive tests.

Patent JP 2007145409 for example provides for applying a voltage between two electrodes located at the cap, one of which inside and the other outside the container, and thus verifying the sealing of the cap by measuring passages of current due to discharges between the electrodes, indicating the presence of micro fissures for communication between the cap and container.

In practice, this control method revealed some drawbacks.

First and foremost it is not capable of discriminating the presence of micro-holes having dimensions such to allow the microorganisms to overcome the sealing of the cap on the opening of the container (typically greater than 0.5 µm) by the presence of micro-holes of negligible dimensions but distributed on several parts along the sealing such to generally determine microdischarges which are read by the measurement instruments as a passage of current sufficient to discard the container.

This control method provides for the breakage of the container to allow inserting an electrode therein so as not to allow usage thereof in line for verifications, no longer with samples, but systematically on all containers.

Furthermore, there is known, for example from patent US 5,535,618 a method for evaluating the sealing of the caps on containers, which provides for inserting the container capsized with the cap submerged in an electrolytic solution and applying a voltage between two electrodes located, one inside the electrolytic solution of the container and one in an electrolytic solution inserted in the capsized container. In this case, the verification of the sealing of the cap is obtained by measuring passages of current through the liquid which seeps into the possible micro-holes present between the cap and container.

Also this method, of the known type described above, can be carried out only with the sample on the containers of a bottling line being provided by means of destructive tests and requires several operations for preparing the single tests. Furthermore, like the first method described, also the latter method revealed to be unsuitable to accurately discriminate micro-holes of dimensions such to allow the microorganisms to overcome the sealing of the cap with respect to micro-holes distributed on the sealing but of negligible dimensions with the aim of maintaining the aseptic qualities of the container.

Furthermore, methods for controlling the sealing of the cap of a container which provide for applying to electrodes externally associated to the container a high voltage in sinusoidal regime, and verifying the presence of micro-holes from the measurements of the current intensity which passes between the electrodes following the application of such voltage at sinusoidal regime are known, for example from patents JP 2006 337064 and US 4,243,932.

Also these methods of known type revealed drawbacks.

A first drawback is due to the fact that the use of voltage at sinusoidal regime requires using voltage generators, which are provided with a considerably complex and expensive electronics system and comprise transformers of considerable dimensions.

Furthermore, the use of a sinusoidal voltage regime requires the consumption of considerable amounts of energy by the voltage generator, with ensuing high process costs.

Patent US 6,288,554 describes a method for controlling the sealing of caps of containers, in particular bottles or vials for use in the pharmaceutical industry, which provides for arranging the container horizontally with a widened portion thereof resting on a first electrode connected to the earth, and inserting the cap and the opening of the container within a second electrode which ends up at direct contact with the entire external surface of the cap and of the opening of the container. Thus, the method described in US 6,288,554 provides for applying a continuous voltage between the two electrodes by means of a voltage generator connected to the first electrode.

Subsequently, the method provides for connecting the first electrode to the earth and measuring possible passage of current related to the presence of micro-holes between the cap and the opening of the container.

Also this solution of the known type revealed drawbacks.

A first drawback lies in the fact that it is required to insert the opening and the cap of the container into the second electrode and maintaining them at direct contact with the latter, with the ensuing risk of errors in the detection of measurements also following slight variations of the second electrode by the opening and by the cap of the container.

Furthermore, the need to maintain the second electrode at direct contact with the entire external surface of the opening and of the cap of the container requires using second electrodes shaped differently upon the variation of the containers to be subjected to the method, with an ensuing considerable cost of implementing the method thereof.

A further drawback lies in the fact that the method described in US 6,288,554 does not allow discriminating with sufficient margin of accuracy the containers with aseptic sealing from faulty containers, in that it does not provide for distinguishing currents due to the presence of micro-holes from other currents which are discharged to the earth when the second electrode is connected to the earth and due to small discharge phenomena which engage charges normally present on the outer surface of the cap. Such further currents are not detected by the measurement device as considerably high current peaks and they can be interpreted as currents due to the presence of micro-holes, causing the undesired discard of containers provided with aseptic sealing.

Patent WO 2006/026167 describes an apparatus for controlling the sealing of a cap on bottles, in particular for use in the pharmaceutical industry, of relatively small dimensions, which comprises a plurality of conveyor carriages, each of which receives in seat thereof a bottle and conveys it guided by a cam to be arranged horizontally counterfaced to an underlying plurality of electrodes arranged at a measurement station along a passage trajectory of the carriages. A second electrode is provided with a bar in proximity of the bottom of the bottles.

The latter are held in the seat thereof by special retention means and they are rotated around the longitudinal symmetric axis thereof, before the electrodes by means of a motorized conveyor which is arranged resting on a longitudinal portion of the vial.

The abovementioned apparatus revealed to be poorly efficient requiring extremely long inspection times and which are incompatible with the modem bottling lines.

The abovementioned apparatus does not allow treating containers with shape not suitable to roll and they are poorly suitable to operate with heavy containers with high inertia, i.e. even with plastic containers which can vary the shape thereof during the rolling determining inertial moments which impose extremely limited advancement speed to the vial.

According to such apparatus, the conveying carriages are both responsible for holding the vials and the rotation thereof from vertical to horizontal and also the advancement thereof through the measurement station as well as access to the discharge from the apparatus. The choice of the abovementioned carriages revealed to be expensive and it is mechanically incompatible for use with containers of the dimensions normally used for preserving the beverages such as mineral water, juices, etc.

Furthermore, such apparatus does not address problems related to the sealing of caps, usually made of plastic, provided for to close bottles for holding beverages for human consumption.

A further drawback of the apparatus described in patent WO 2006/026167 and of the previously described apparatus lies in the poor capacity of the method used for controlling the sealing of caps to discriminate the faulty containers from the containers with aseptic sealing.

Actually, such known methods use calculation steps starting from the current measurements which do not allow discriminating with sufficient margin of accuracy and simplicity the faulty containers to be discarded from the containers with aseptic sealing to be kept.

Hence, the known methods for controlling the sealing of caps determine the discarding of containers that could be placed in the market due to the fact that they are provided with the aseptic sealing or, worse, they allow using containers which instead, upon deeper examination, could be faulty.

### Presentation of the invention

Thus, the problem on which the present invention is based is that of overcoming the drawbacks revealed by the solutions of known type, by providing a method for controlling the sealing of caps on containers capable of allowing selecting in an improved manner the containers not suitable to maintain the aseptic conditions over time.

Further object of the present invention is to provide an apparatus for controlling the sealing of caps on containers, which allows efficiently discriminating the containers with aseptic sealing from those without such sealing.

Further object of the present invention is to provide an apparatus for controlling the sealing of caps on containers, which is both simple and easy to install on the plants for bottling liquids for human consumption.

Further object of the present invention is to provide an apparatus for controlling the sealing of caps on containers, which allows of conducting a control on all the containers that pass in a plant for bottling liquids for human consumption in aseptic conditions.

Further object of the present invention is to provide an apparatus for controlling the sealing of caps on containers, which is easy to maintain and to repair.

Further object of the present invention is to provide a method and an apparatus for controlling the sealing of caps on containers, which are easy to calibrate and test and entirely reliable from an operative point of view.

Further object of the present invention is to provide a method and an apparatus for controlling the sealing of caps on containers, which are versatile to use for the inspection of containers of different types.

Further object of the present invention is to provide an apparatus and a method for controlling the sealing of caps on containers which allow verifying the aseptic conditions of the containers in a non-destructive manner, and in particular in the line of the bottling plants.

### Brief description of the drawings

The technical characteristics of the finding, according to the abovementioned objects, are clearly observable from the contents of the claims indicated below and the advantages thereof are clearer in the detailed description that follows, provided with reference to the attached drawings, which represent some embodiments thereof, purely by way of non-limiting example, wherein:
- figure 1 shows a perspective schematic view of a first example of apparatus for controlling the sealing of caps on containers, subject of the present invention;

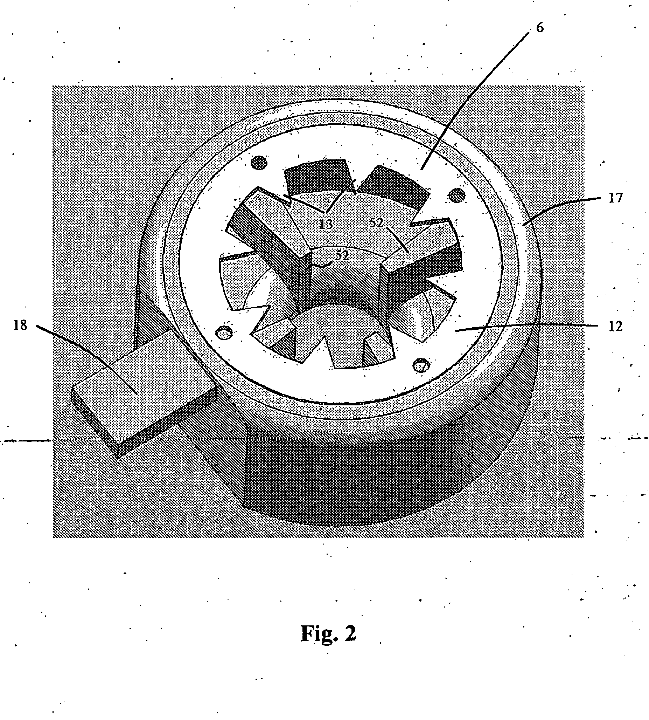

- figure 2 shows a perspective view of a detail of the apparatus of figure 1 relative to a first electrode mounted on a support;

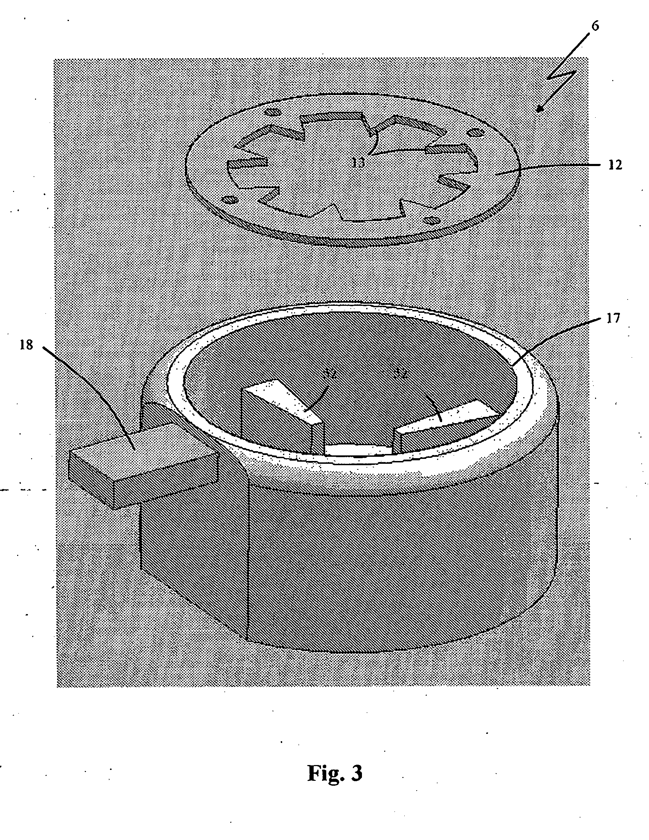

- figure 3 shows the detail of figure 2 in an exploded view;

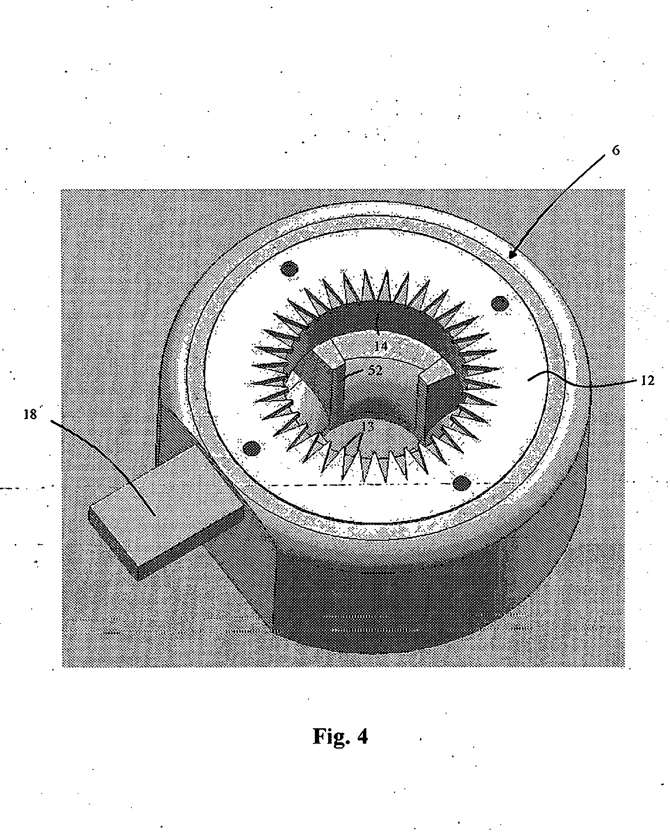

- figure 4 shows a perspective view of a variant embodiment of the detail of the apparatus relative to the first electrode mounted on a support;

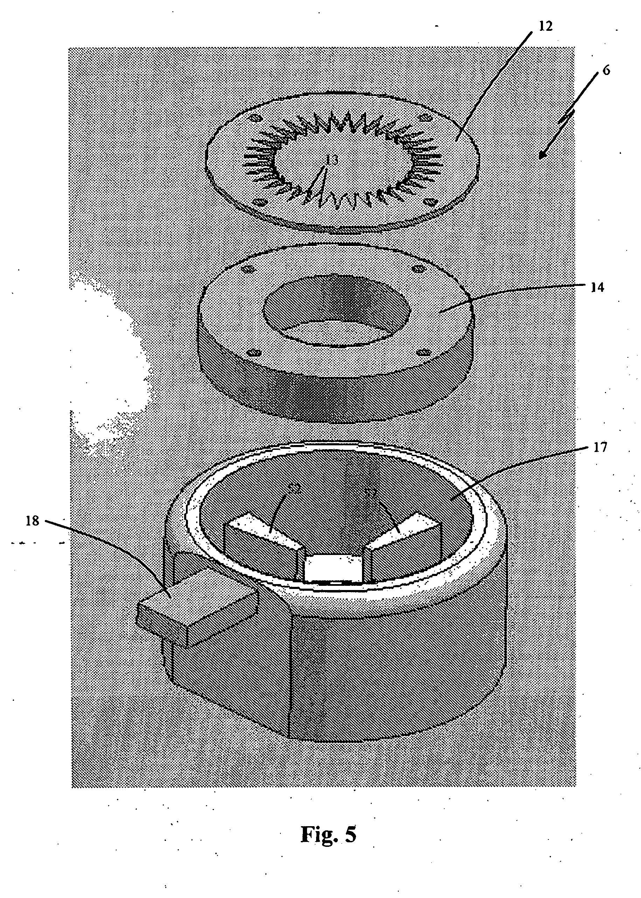

- figure 5 shows the detail of figure 4 in an exploded view;
- figure 6 shows a perspective schematic view of a second example of apparatus for controlling the sealing of caps on containers, subject of the present invention, with some parts transparent for a clearer view of the others;
- figure 7 shows a top view of the apparatus of figure 6 with some parts removed for a clearer view of the others;
- figure 8 shows a side view of an enlarged detail of the apparatus of figure 6 relative to a section of the operative travel of the containers;
- figure 9 shows a cross-sectional view of the apparatus of figure 6 relative to the section of the operative travel and passing through the first and the second electrode;
- figure 10 shows a perspective schematic view of a third example of apparatus for controlling the sealing of caps on containers, subject of the present invention;
- figure 11 shows the apparatus of figure 10 with some parts transparent for a clearer view of the others;
- figure 12 shows an enlarged detail of the apparatus of figure 10 relative to an inspection section of the containers with some parts in section at a first electrode;
- figure 13 shows an enlarged perspective view of the inspection station of the apparatus of figure 10 with some parts transparent for a clearer view of the others;
- figure 14 shows a perspective schematic view of a fourth example of apparatus for controlling the sealing of caps on containers, subject of the present invention;
- figure 15 shows a top view of the apparatus of figure 14;
- figure 16 shows a perspective view of an enlarged detail of the apparatus of figure 14 relative to a section of the travel of the containers in an inspection wheel;
- figure 17 shows a perspective view of an enlarged detail of the apparatus of figure 14 relative to an inspection section of the containers;
- figure 18 shows a radial section view of the apparatus of figure 14 carried out at the inspection station;
- figure 19 illustrates a diagram of the equivalent electrical circuit of the apparatus for controlling the sealing of the caps subject of the present invention;
- figures 20 and 21 illustrate two examples of the development of the voltages and of the current during the execution of the method for controlling the sealing of a cap on a container subject of the present invention, respectively in the case of cap not suitable to maintain the aseptic sealing and of a cap suitable to maintain the aseptic sealing;
- figure 22 illustrates a table bearing an example of experimental results obtained with the method subject of the present invention, compared with the experimental results obtained with methods of the known type.

### Detailed description of a preferred embodiment

With reference to the attached drawings the apparatus for controlling the sealing of a cap 2 on a container 3, subject of the present invention is indicated in its entirety with 1.

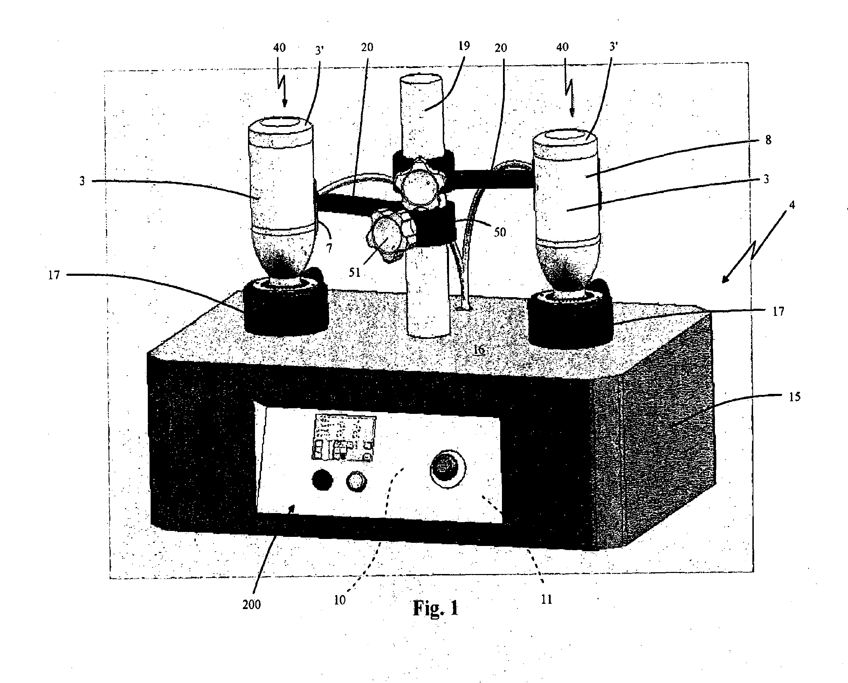

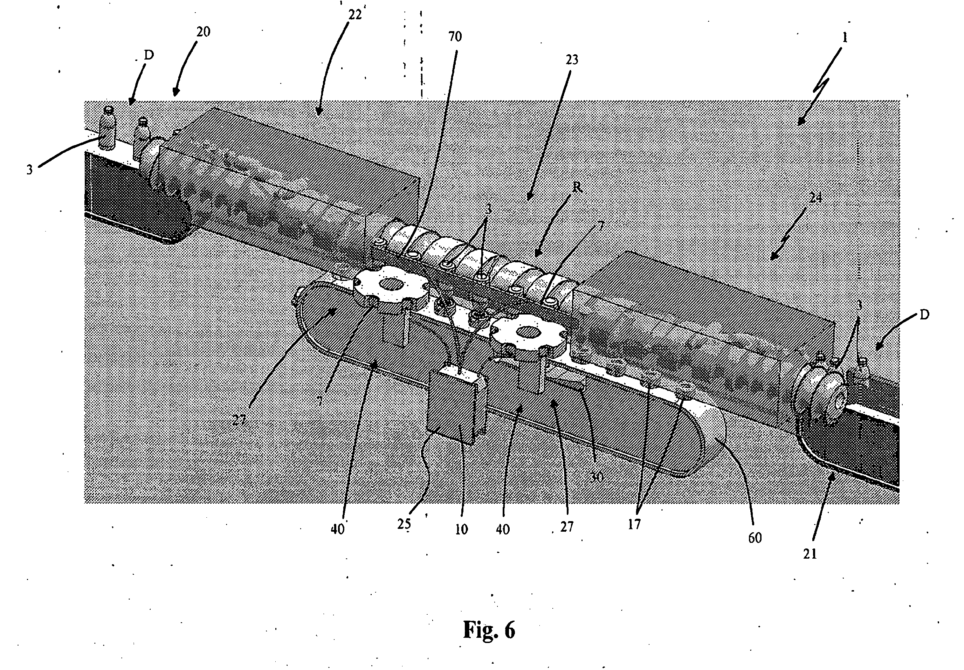

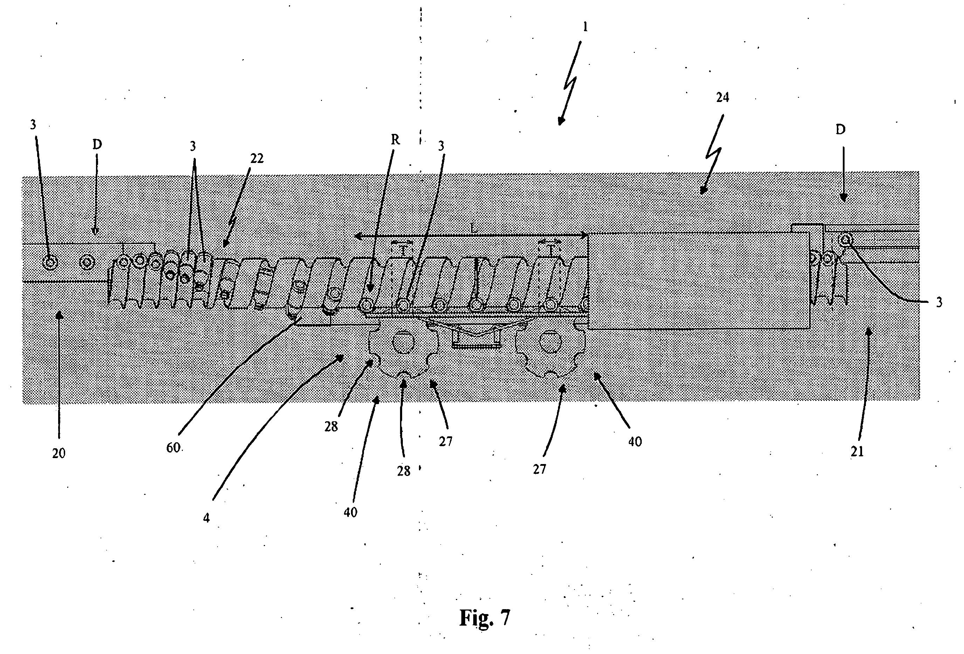

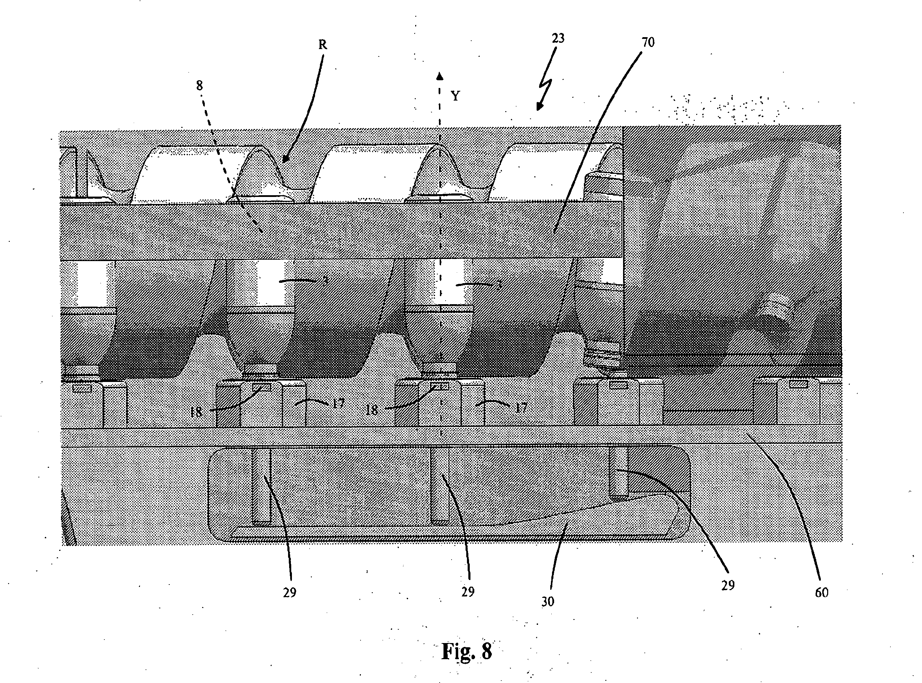

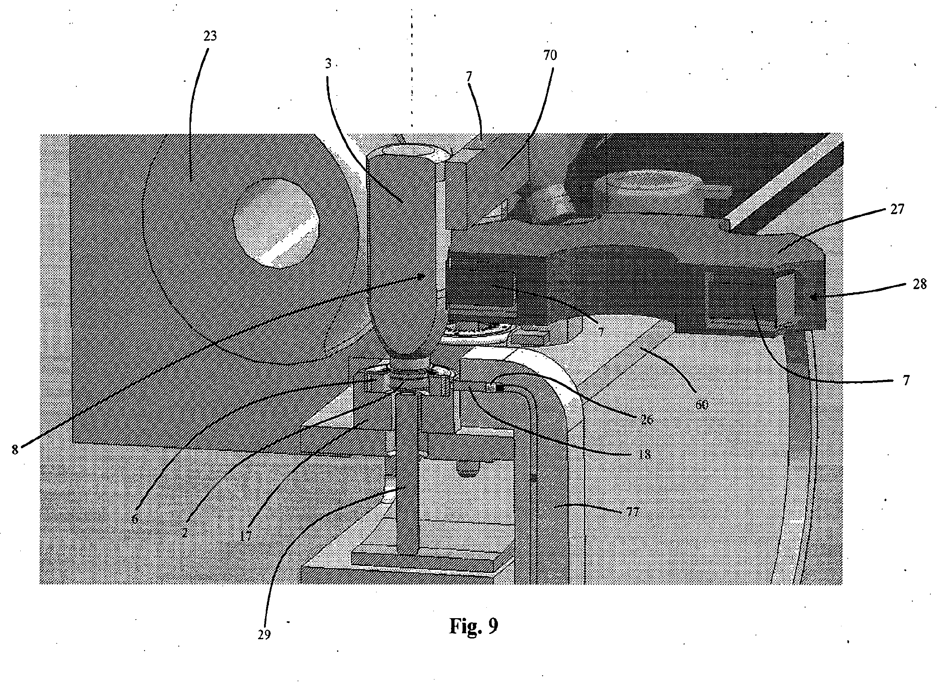

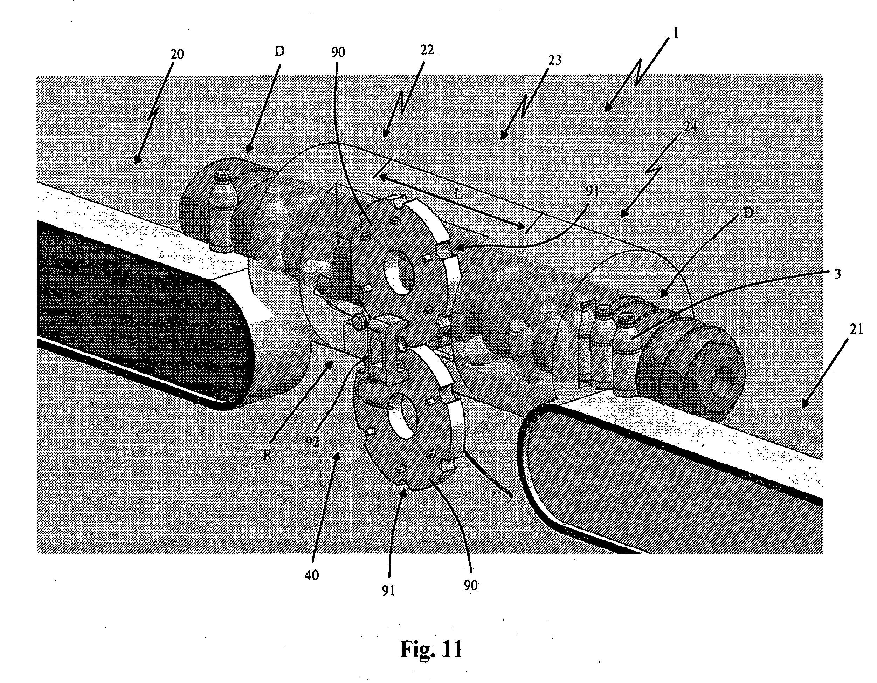

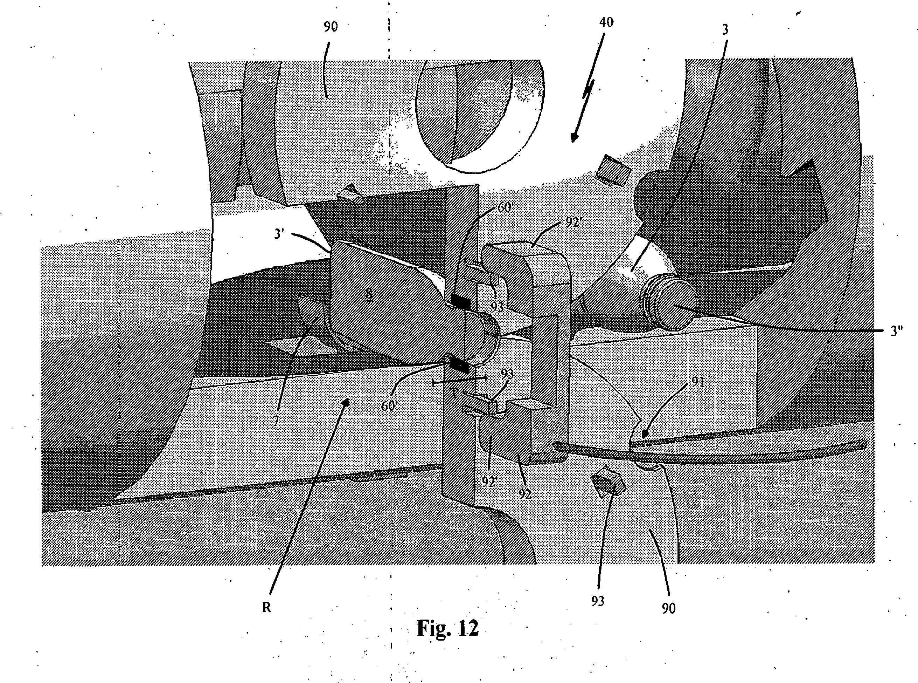

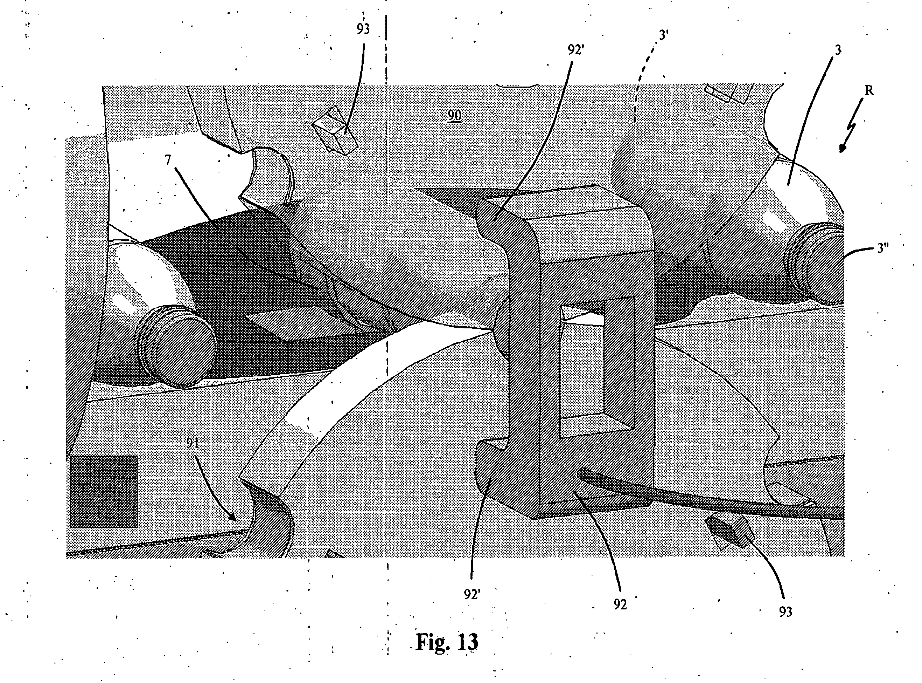

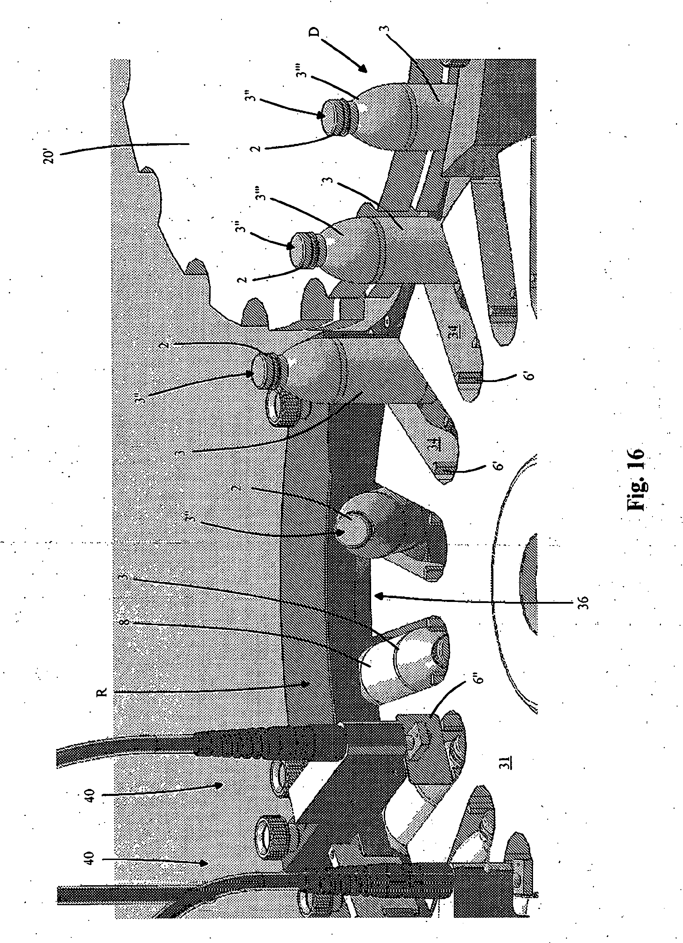

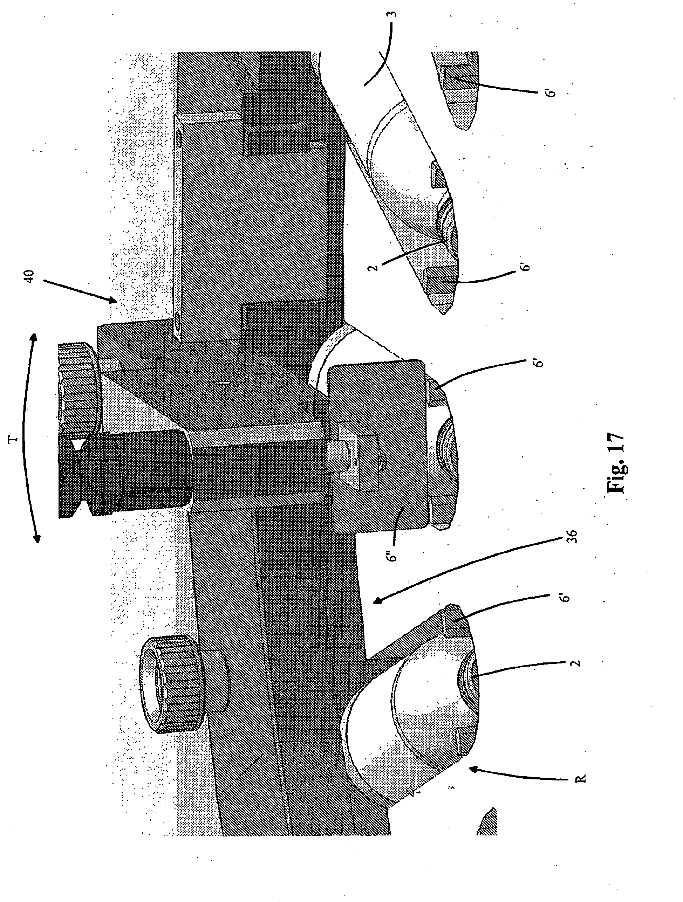

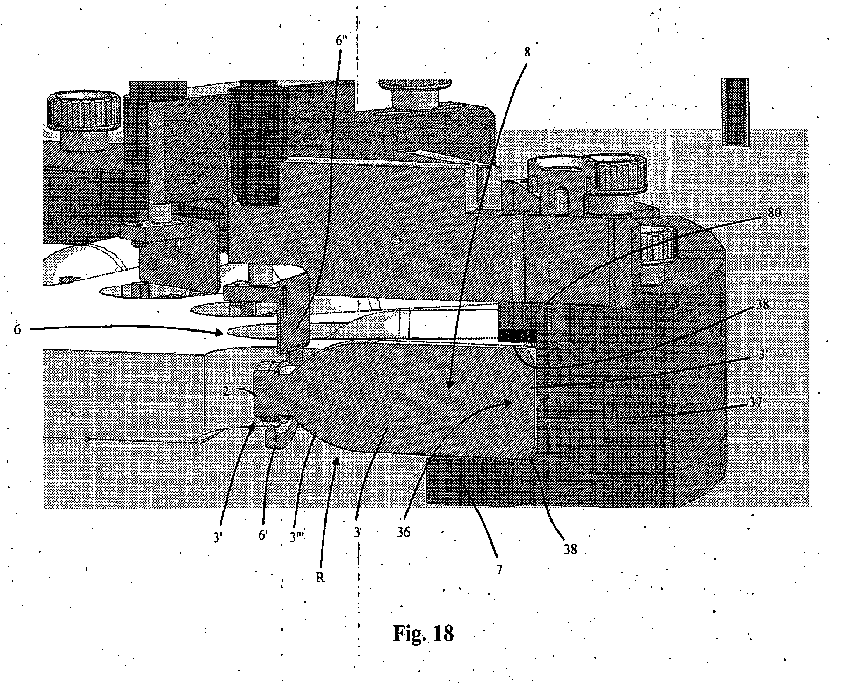

Such apparatus may be intended for controlling a sample of containers of a plant for aseptic bottling, as illustrated for example in figure 1, i.e. they may be mounted in a plant for aseptic bottling as illustrated in the examples of figures 6-18.

The apparatus 1 is suitable for controlling the sealing of a cap 2 on a container 3 capable of efficiently discriminating the containers 3 capable of maintaining the aseptic conditions of the liquid contained therein over time, from those that instead lose such conditions allowing the entry of microorganisms into the container 3.

The apparatus 1 is suitable to be used with containers 3 of any type available in the market, and obtained in any insulating material, such as plastic bottles and in particular PET bottles, for containing liquids provided with a conductivity exceeding 0.5 µS/cm such as for example, mineral water, fruit juice and beverages in general.

The apparatus 1 has particularly high performance with liquids, such as mineral waters and beverages, having, as known, conductivity in the order of 100 µS/cm or greater, with the juice having, as known, conductivity in the order of 1500 µS/cm or greater, or with other human consumption fluids, unless in extremely rare cases, they always have a conductivity increasing 0.5 µS/CM.

The containers 3, and in particular PET bottles, develop in a per se known manner in a main direction along which they define a longitudinal axis Y, and they are provided with a bottom 3' for resting on a plane, with a carrying head 3" mounted the cap 2 and usually placed at the end of a fitting neck 3"' with a widened position 8.

The apparatus 1 is advantageously intended to control the wholeness of the containers 3 provided with caps 2 with screws contained in an insulating plastic material, such as for example the high density polyethylene, provided with an internal threading and fastened by screwing onto the external threading of the head of the container 3.

The plastic caps for the PET bottles, usually obtained using HDPE are in particular of the low cost type i.e. obtained in a single body and without internal insulating membranes aimed at improving the sealing, which is obtained in a per se conventional manner usually by providing a groove on the bottom of the cap defined between two parallel ribs, adapted to receive the opening of the container, in particular possibly also deforming the ribs for greater sealing thereof on the inner and outer walls of the opening of the container.

Advantageously, the apparatus 1 and the method according to the invention are aimed at verifying whether the sealing between the two plastic surfaces (usually quite rigid) of the container 3 and of the cap 2, are capable or less of maintaining the aseptic conditions guaranteed by the bottling line, and aimed at preserving the liquid contained in the container 3 against contamination by microorganisms over time.

As clearly described hereinafter, the apparatus 1 subject of the present invention, is suitable to verify the aseptic sealing at a cap through the diagnostic control of a dynamic of currents which traverse an electrical insulation interposed between a liquid, at least partly conductive, and an electrode arranged outside the container at the cap. Therefore, the present apparatus is suitable to verify the aseptic conditions also on glass bottles closed with caps even metal caps, of the crown or cork type, where there is provided an electrical insulation between the metal part of the cap and the liquid contained in the container through an insulating material, generally a sealing gasket.

The term sealing is used to indicate the absence of air passages i.e. the absence of micro-holes located at the joint between the cap 2 and container 3, and having such dimensions to allow the microorganisms to enter into the container 3 and thus contaminate the liquid contained therein.

The term micro-holes is also used to indicate micro-fissures between the cap 2 and the opening of the container 3 due to an erroneous or insufficient fastening torque between the cap 2 and the opening of the container 3.

In the literature, it was possible to verify that micro-holes smaller than a few microns allow guaranteeing good aseptic conditions.

Micro-holes of dimensions smaller than 0.5 µm revealed to be sufficiently small to preserve the bottled liquid against external contamination. The apparatus 1 and the method according to the invention are thus aimed at discriminating containers 3 advantageously provided with micro-holes of dimensions greater than 0.5 µm in that unsuitable to maintain the ideal aseptic conditions of the liquid contained in the containers 3 over time. Obviously, there may be provided for a margin of safety for a more certain discrimination of all containers 3 unsuitable for the correct preservation of the liquids.

The apparatus 1 comprises support means 4 for holding the container 3 in at least partly capsized position R with the liquid at contact internally with the cap 2. Furthermore, the apparatus 1 comprises two electrodes 6, 7, of which a first electrode 6 having a first capacitive coupling C1 with the container 3 and associated to the latter at the cap 2, and a second electrode 7 having a second capacitive coupling C2 with the container 3 and associated to the latter at the widened portion 8 thereof, which is spaced from the cap 2 and is internally wet by the liquid contained in the container 3 when the latter is in the partly capsized position R thereof. More in detail, the second capacitive coupling C2 is made up of a first armour constituted by the second electrode 7 and by a second armour constituted by the liquid contained in the container 3, with the dielectric material of the latter interposed between the second electrode 7 and the second armour constituted by the liquid. The widened portion 8 of the container 3 may for example be identified in the part of the container 3 that develops along the longitudinal axis Y of the latter from the bottom 3' thereof up to the beginning of the tapered part of the neck 3"'. Preferably, such widened portion 8 shall be selected at the median portion of development of the container 3.

The apparatus 1 according to the invention further comprises a pulse generator 10, which supplies the electrodes 6, 7 with voltage pulses suitable to generate at the first electrode 6 arranged at the cap 2, i.e. the area where there is provided the control of the aseptic sealing, an electrical field of intensity greater than the dielectric rigidity of the air interposed between the liquid and the first electrode 6, thus generating currents which traverse at least one possible micro-hole located between the cap 2 and the opening of the container 3, traverse the liquid and close by capacitive means on the second electrode 7.

The apparatus 1 is provided with a measurement device 11, which measures the passages of the current between the electrodes 6, 7 due to the abovementioned voltage pulses.

Furthermore, the apparatus 1 comprises a logic control unit, which receives the measurements of current from the measurement device 11 and calculates the values of current integrals selecting the values exceeding a preset threshold value, produced by the currents between the two electrodes 6, 7 and passing through the micro-holes present between the cap 2 and the opening of the container 3, to discriminate the faulty containers, i.e. the containers provided with caps not capable of guaranteeing the aseptic sealing (due to the presence of micro-holes), from those capable of guaranteeing such with aseptic sealing.

The values of current integrals smaller than the abovementioned threshold value otherwise indicate the containers 3 without micro-holes that can represent a problem for the aseptic quality of the containers 3, and correspond to passages of current substantially not due to the lack of sealing of the container 3 and thus easy to discriminate with respect to values regarding the currents which pass through the micro-holes which, though involving extremely small areas, traversing the liquid, cause a discharge dynamic easily detectable by the measurement device 11.

According to the idea on which the present invention is based, the liquid actively takes part in the detection of the control of the aseptic sealing of the container 3, thus causing with the conductivity thereof the establishment, at the first electrode 6, of an electrical field, which, following the abovementioned voltage pulses is sufficiently high to break the dielectric rigidity of the air in presence of micro-holes in the sealing. Furthermore, the liquid takes part in the current discharge phase in presence of micro-holes offering low impedance and thus allowing the establishment of a current that is particularly evident and easily detectable by means of the measurement device 11. Advantageously for the purpose, the second capacitive coupling C2 of the second electrode 7 with the container 3 is selected greater than the first capacitive coupling C1 of the first electrode 6 with the container 3, and preferably at least 10 times greater, so as to near the voltage of the liquid to the voltage of the second electrode 7 and thus increase the electrical field produced by the voltage pulses at the first electrode 6.

Preferably, with reference to an advantageous application of the present apparatus for controlling PET bottles closed with caps made of HDPE, the pulse generator 10 is susceptible to generate successions of voltage pulses, in particular at a frequency comprised between 100 Hz and 3000 Hz, and at a peak value comprised between 1 KVolt and the 70 KVolts.

For example, there may be provided for enabling a period of measuring a few tens of ms, and advantageously 20-130 ms, in which the pulse generator 10 sends pulse sequences lasting T^{on} of 10 ms at 800 Hz at 45 KVolt of a peak value, and alternated to durations of T^{off} of 1 ms to avoid the overheating of the reel of the transformer for elevating the voltage of the pulse generator 10.

The calibration of the voltage shall depend on the length of the current arc to be created, on the conductivity of the liquid, on the form of the electrodes 6, 7 on the form of the cap 2 and on the characteristics of the latter for example sealing with the threads of the container 3.

The measurement device 11 may for example comprise a shunt suitable to measure the voltage drops on a resistance thereof (for example R-shunt equivalent to 20-500 Ohm) indicating the passages of current between the electrodes 6, 7.

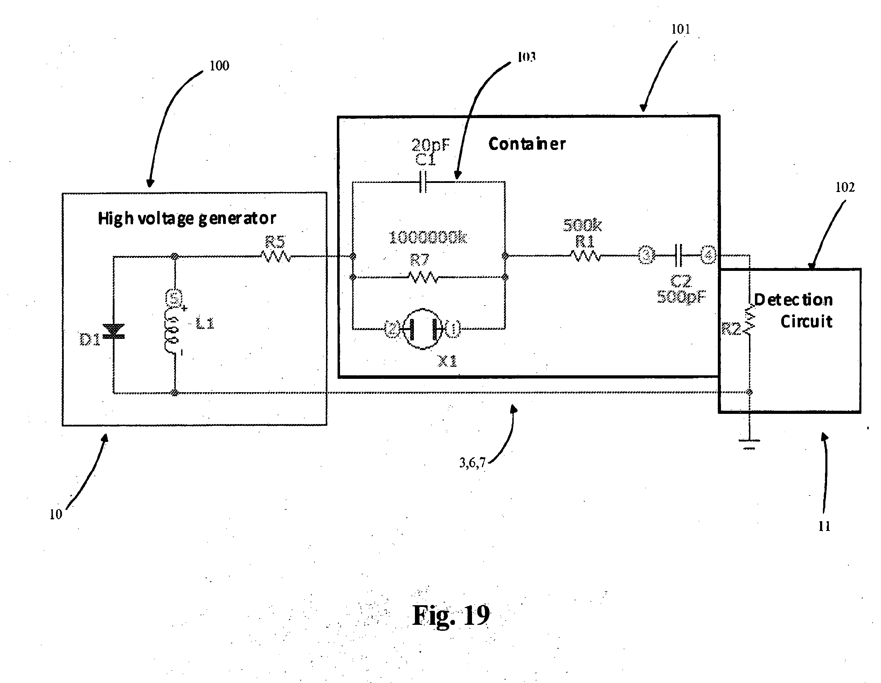

With reference to the embodiment illustrated in figure 19, the equivalent electric circuit diagram of the apparatus 1 for controlling the sealing of the caps comprises a first circuit 100 relative to the pulse generator 10, a second circuit 101 relative to the container 3 with associated the two electrodes 6, 7, and a third circuit 102 relative to the measurement device 11.

More in detail the first circuit 100 of the pulse generator 10 is exemplified in the case of a pulse transformer, in a per se known manner, with an inductance L1 of a secondary of a transformer having in parallel a diode D 1 and with an internal resistance R5 in series such as parallel connections.

The second circuit 101 comprises a parallel circuit 103 between the first capacitive coupling C1 of the first electrode 6 with the container 3 at the cap 2 and a resistance R7 of the sealing of the cap 2 on the opening of the container 3.

The second circuit 101 further comprises a resistance R1 of the liquid contained in the container 3, such resistance R1 is connected in series with the second capacitive coupling C2 of the second electrode 7 with the container 3 at the widened portion 8 thereof.

The parallel circuit 103 is connected in series to the first circuit 100 of the pulse generator 10 and to the terminal of the resistance R1 opposite to that of the connection to the second capacitive coupling C2.

The third circuit 102 of the measurement device 11 comprises a resistance R2 of the shunt, which is connected in series to the second capacitive coupling C2 of the second electrode 7 with the container 3.

The terminal of the resistance R2 opposite to the terminal connected to the second capacitive coupling C2 is connected to the earth i.e. to the reference terminal of the first circuit 100 of the pulse generator 10 (in the equivalent diagram it is connected to the terminal of the parallel between the inductance L1 and the diode D1 of the pulse generator 10 opposite to the connection of such parallel with the second circuit 101).

The device 11 shall measure a current of the capacitive type. In case of presence of micro-holes, the development of the current detected by the measurement device 11 shall be considerably different with respect to the case without discharge indicating the absence of holes (as described in detail hereinafter), and which can be measured for example preferably in the maximum values of the integral during the burst by means of a sampler electronic circuit, such as for example of sample and hold type, adapted to send the measured signals to an analogue-digital converter of the logic control unit. The latter selects for example the maximum values of the integral of the current over time T^{on} calculated on all the burst values and compares them with the threshold values of maximum current integrals preset in the logic control unit and adapted to discriminate the containers 3 that have values greater than the thresholds and indicating of the presence of micro-holes.

The invention surprisingly revealed that in absence of micro-holes suitable to make the container to lose the aseptic sealing, there are no currents with high current integrals value. Therefore, values greater than the thresholds of maximum integral indicate, in a manner that could also be precautionary, the presence of micro-holes suitable to make the container 3 lose the aseptic sealing thereof.

Thus, once established empirically, the threshold values of maximum current integrals indicating the absence of micro-holes, the containers 3 having values of maximum current integrals exceeding such threshold values i.e. exceeding such threshold values by a variation percentage adapted to guarantee a safety margin are discarded as unsuitable.

Generally, a greater second capacitive coupling C2 of the second electrode 7 and a greater conductivity of the liquid shall allow having a greater electrical field in proximity of the first electrode 6 to overcome in case of micro-holes the dielectric rigidity of the air.

Preferably, the first electrode 6 is arranged spaced from the cap 2, so that the voltage pulse produced by the pulse generator 10 on such first electrode 6 causes the ionization of the air at the cap 2, facilitating the establishment of the current in case of presence of micro-holes in the sealing of the container 3.

Preferably, furthermore, the second electrode 7 contacts the container 3 for a greater effect of the second capacitive coupling C2.

The first electrode 6 is preferably obtained made of steel and has an annular form, advantageously closed but possibly also partly open for application needs inserting the head of the container into the electrode, to verify the sealing of the cap 2 on the entire circumference of the opening of the container 3, and it shall be preferably positioned at the grooves provided for delimiting the safety seal of the cap 2, where i.e. it is possible to easily pass the discharge. The latter shall preferably traverse the threads, usually not capable of providing a particular sealing and then reaching the possible connection micro-hole with the interior of the container 3, positioned between the opening of the container 3 and the external surface of the bottom of the cap 2.

In case of good sealing between the threads of the cap 2 and of the container 3, the discharges, having to traverse the trajectory defined between the threads, are forced to extend the path thereof and hence the pulse generator 10 to establish discharge conditions should increase the voltage of the pulses so as to increase the gradient of the field in proximity of the cap 2.

Advantageously, the gradient of the field can be improved by providing a first electrode 6 provided with a first annular portion 12 internally provided with a plurality of projecting tips 13 facing towards the cap 2 and adapted to increase the charge surface density for an easier triggering of the discharge.

According to an embodiment version of the present invention, the first electrode 6 may also comprise at least one substantially tubular-shaped second annular portion 14 arranged at the lower part with respect to the first portion 12 and extending at the front part to the lateral wall of the cap 2. Such second annular portion 14, may also be obtained in a single piece with the first, and it has the purpose of determining a spread ionisation of the air contained between the threads of the cap 2 and of the container 3, lowering the dielectric rigidity of such air and thus facilitating the triggering of the discharge in presence of micro-holes.

The number of the tips 13 or the height of the annular portion 14 may vary depending on the specific applications generally by balancing the need of the first electrode 6 of having a low capacitive ratio with the liquid and the need of also ionising the air arranged at the cap and in particular between the abovementioned threads.

The second electrode 7 is preferably formed by a plate made of conductive material, for example steel, electrically connected with a supply cable to the pulse generator 10. The plate is counter-faced to the widened portion 7 of the container 3 when the latter is in the abovementioned at least partly capsized position R and is preferably counter-shaped with respect to the container 3 to increase the capacitive coupling effect.

According to a first embodiment of the present invention illustrated in figure 1, the apparatus is intended to carry out the control of the sealing of the caps 2 on containers 3 sample collected from the aseptic bottling plant.

The means 4 for supporting this apparatus comprise a box-shaped body 15 containing the generator of voltage pulses 10 and the measurement device 11 externally controlled by a control panel 60. The box-shaped body defines - at the top part - a support plane 16 on which there are fixed two first electrodes 6 of two preset inspection stations 40.

Obviously, the apparatus 1 could also be provided with only one inspection station 40 (and thus with only one first electrode 6 and with only one second electrode 7 or otherwise even with more than two stations 40) without departing from the scope of protection of the present invention. Advantageously, each of the abovementioned first electrodes 6 is annular shaped and it is coaxially housed within a support 17, made of insulating plastic material, substantially tubular-shaped, having an aperture from which there projects a terminal 18 for the electrical connection to the pulse generator 10.

Within the support 17 at the lower part thereof there are provided frames 52 for supporting the first annular electrodes 6, possibly formed by the two portions surmounted with respect to each other - tip and cylindrical - mentioned previously respectively with references 12 and 14.

From the support plane 16 of the box-shaped body 15 there arises a column 19 to which there are fixed, in an adjustable manner, a pair of arms 20, preferably horizontal, carried fixed to the free ends two corresponding second electrodes 7 obtained with metal plates arc-shaped and countershaped with respect to the widened portion 8 of two respective containers 3. More in detail, the arms 20 carry fixed a bushing 50 coaxially mounted on the column 19 susceptible to slide therealong, to rotate therearound and be blocked at the desired position on the column by means of a screw 51 with a widened head actuated manually.

The containers 3 are supported on the support base 16 advantageously both by the engagement of head of the container 3 in the first annular electrode 6 and by second electrodes 7.

Thus, the previously mentioned support means 4 comprise, according to this first embodiment of the apparatus 1 according to the invention, the box-shaped body 15 with the support base thereof 16, the support 17, the column 19 as well as also preferably the first and second electrodes 6 and 7. Obviously, the man skilled in the art may provide such support means 4 with many other embodiments also entirely independent from the form of the electrodes 6 and 7 without departing from the scope of protection of the present invention.

Figures 6-9 illustrate a second embodiment of the present invention, in which the apparatus 1 is suitable to receive the containers from inlet means 20 and transfer them to outlet means 21 transporting them along a substantially rectilinear trajectory.

More in detail, the apparatus 1 comprises first tilting means 22, which receive the containers from the inlet means 20, for example constituted by a first conveyor belt, and capsize them from a straight position D, in which the containers 3 rest with the bottom 3' thereof, to the at least partly capsized position R, which, in the preferred case illustrated in the attached figures, is substantially of complete capsizing with the head 3" of the containers 3 facing downwards and associated to the first electrodes 6.

The latter are advantageously of the type described in detail previously with reference to the first embodiment.

The containers 3 in capsized position R are displaced by advancement means 23 guidably along an operative travel L until they are taken over by second tilting means 24, which capsize the containers 3 once again, taking them to the capsized position R, in which they are associated with the head 3" to the first electrodes 6, at the straight position D, in which they rest with the bottom 3' thereof to continue the travel on the outlet means 21, for example constituted by a second conveyor belt. During the operative travel L, when the containers 3 are in capsized position R, the second electrode 7 contacts the widened portion 8 for at least one measurement section T of the abovementioned operative travel L. During such measurement section T the pulse generator 10 supplies the electrodes 6, 7 and the measurement device 11 records the values of current and discriminates the containers 3 not suitable to maintain the aseptic conditions over time, as described previously in detail.

The apparatus shall advantageously provide for discharge means of the type per se known to the man skilled in the art and thus not described in detail, which shall receive the data from the measurement device and selectively discharge only the containers 3 not suitable to maintain the aseptic conditions over time from the advancement line.

The advancement means 23 comprise a conveyor auger provided with a propeller in which the containers 3 are inserted for the section of operative travel L which allows conveyance thereof between the two tilting means 22 and 24.

Advantageously, the conveyor auger 23 advances the containers resting on a horizontal guide bar 70.

The first and the second tilting means 22 and 24 are advantageously constituted by a first and by a second auger capsizing means, of the type per se known to a man skilled in the art, suitable to tilt the containers by means of the combined action of the variable pitch propeller of the auger, in which the containers 3 are positioned, and an external guide protection casing.

Advantageously, the two auger capsizing means 22 and 24, and preferably only the second capsizing means 24, are assisted to lift the containers 3 by pusher pins 29, elastically mounted below each support 17 of the first electrodes 6, which is suitably axially hollow (differently with respect to the example of figure 1). At the first turns of the auger capsizing means 22, 24 a lifting cam 30 suitable to interfere with the pusher pins 29 lifting them through the through hole of the first electrodes 6 up to reaching the container 3 to facilitate tilting thereof is arranged at the lower part. Advantageously, the two auger tilting means 22, 24 and the conveyor auger 23 are parts of a single auger having sections with variations of the pitch of the propeller to tilt or simply advance the containers 3.

The advancement means 23 also comprise a conveyor belt 60, which advances in phase with the conveyor auger 23 and mounted fixed equally spaced with respect to each other the first electrodes 6 suitable to be coupled to the heads 3" of the containers 3 along the operative travel L thereof. The previously mentioned support means 4 for supporting the containers 3, in this case guidably during the advancement thereof, can be obtained through various technical solution and with reference to the specific example illustrated in the attached figures are formed by the conveyor auger 23 by the horizontal guide bar 70 and by the conveyor belt 60.

The pulse generator 10, by way of example contained in the panel 25 illustrated in the attached figures alongside the measurement device 11, is connected to the first electrodes 6 by means of a sliding contact provided with a terminal 18, which contacts a fixed electrode 26 integral with a fixed part 77 of the support structure of the apparatus 1 arranged at an inspection section 40 (in the figure there are shown two inspection stations 40), and electrically connected to the generator 10 by means of a power supply cable.

The sliding contact is obtained by pushing the fixed electrode 26 elastically, for example by means of a spring, interfering with the trajectory of passages of the terminals 18 of the first electrodes 6. More clearly, the first electrodes 6 contact by means of the projecting terminal 18 thereof, or differently by means of an outer sliding portion thereof, the fixed electrode 26 for at least the length of the measurement section T of the operative travel L of the containers 3 which advance in the capsized position R.

In turn, the second electrode 7 may be formed by a plate or by an extended sheet, made of conductive material, electrically connected to the pulse generator, fixed to the support structure of the apparatus 1 preferably parallel to the operative travel L at the inspection station 40, so as to slide at contact of the widened portion 8 thereof for at least the same measurement section T of the operative travel L of advancement of the containers 3.

Advantageously, the plate that forms the second electrode 7 may be mounted on the guide bar 70 on which the containers 3 rest during the advancement thereof in capsized position R.

Otherwise, according to a different version of the abovementioned embodiment, there is provided for, at each inspection station 40, a first star 27, which rotates around the vertical axis thereof, it is arranged adjacent to said advancement means 23 and intercepts the operative travel L of the containers 3. More in detail, the star 27 is provided with a plurality of alveoli 28, which receive - therein - the containers 3 which advance in capsized position R along the operative travel L thereof and mounted within the second electrodes 7. The latter, when the alveoli 28 receive the containers 3, contact the widened portion 8 of the latter for the abovementioned measurement section T allowing subjecting the containers 3 to the voltage pulses and to the possible discharges described previously for controlling the sealing thereof. The second electrodes 7 contained in the alveoli 28 of the star are connected to the pulse generator by means of sliding contacts (not represented) and of the type indicated in hereinafter with reference to second stars.

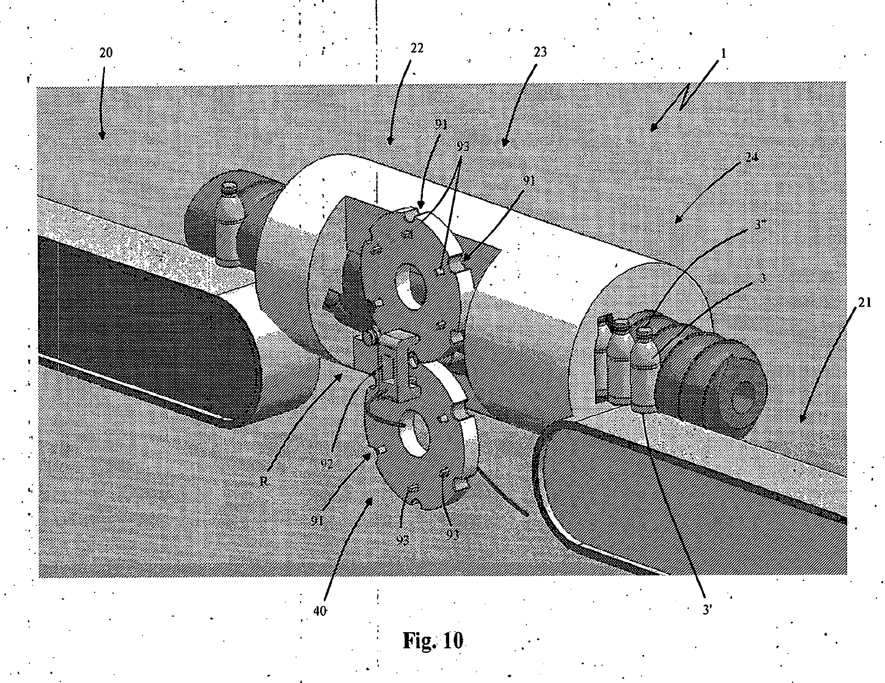

Figures 10-14 illustrate a third embodiment of the present invention, in which the apparatus 1 is suitable to receive the containers from inlet means 20 and transfer them to outlet means 21 conveying them along a substantially rectilinear trajectory.

More in detail, the apparatus 1 comprises first tilting means 22, which receive the containers from the inlet means 20, for example constituted by a first conveyor belt, and capsize them from a straight position D, in which the containers 3 rest with the bottom 3' thereof, to the at least partly capsized position R, which, in the preferred case illustrated in the attached figures, is capsized by 90 degrees with the head 3" of the containers 3 facing laterally to be associated to the first electrodes 6.

The containers 3 in capsized in horizontal position R are displaced by advancement means 23 guidably along an operative travel L until they are taken up by second tilting means 24, which rotate the containers 3 once again, taking them from the capsized horizontal position R, in which they are associated with the head 3" to the first electrodes 6, to the straight position D, in which they rest with the bottom thereof 3' to continue the travel on the outlet means 21, for example constituted by a second conveyor belt.

The advancement means 23 in turn preferably comprise a conveyor auger provided with a propeller in which the containers 3 are inserted for the section of operative travel L which allows conveyance thereof between the two tilting means 22 and 24.

Advantageously, the first and the second tilting means 22 and 24 are constituted by a first and by a second auger capsizing means, and together with the conveying auger 23 they are part of a single auger having sections with pitch variable propellers for tilting or simply advancing the containers 3. The central part 23 of the auger suitable for conveying advances the containers during the operative travel L, when they are capsized in horizontal position R, above the second electrode 7 which contacts the widened portion 8 thereof for at least one measurement section T of the abovementioned operative travel L. Such electrode 7 is advantageously arc-shaped to provide a greater capacitive coupling with the container 3 and it is mobile on a horizontal hinge to allow receiving within the concavity thereof the widened portion of the container. Otherwise, the second electrode may however be obtained with a plate or sheet arranged at contact with such widened portion or with the bottom of the container for such measurement section T. During the latter, the pulse generator 10 supplies the electrodes 6, 7 and the measurement device 11 records the values of current and discriminates the containers 3 not suitable to maintain the aseptic conditions over time, as previously described in detail.

Advantageously, a pair of second stars 90, which rotates counter-rotating with horizontal rotational axis are provided for each inspection station 40. The two second stars are both arranged substantially tangent with respect to the trajectory of the operative travel L to intercept the containers which advance along such travel. Each second star 90 is provided with a plurality of second alveoli 91, which receive - therein - the caps 2 of the containers which advance with the longitudinal axis thereof arranged horizontally along the abovementioned operative travel. Each second alveolus 91 mounted within a portion 60', substantially half-ring-shaped, of the first electrode 6, such portion is coupled with the one provided for in the alveolus of the other second star 90 at a tangency point shared by the two second stars and intercepted by the trajectory of the operative travel. In this manner, the second alveoli 91 of the second stars 90 close one upon the other at the measurement section T of the operative travel L, to form a substantially closed ring around the cap 2 for at least the abovementioned measurement section T. The two alveoli may remain mechanically separated with respect to each other even when they are ring-closed around the cap, for example for the provided tolerance present between the stars and the container. Advantageously, the portions 60' of the first electrodes 6 are supplied by the pulse generator 10 by means of at least one electrical connection body 92. The latter is fixed with respect to the rotation of the two second stars 90 it is bridge-shaped and it is electrically connected to the pulse generator 10. At the measurement section when the pairs of second alveoli 91 are arranged closed one on the other, the connection body 92 electrically contacts by sliding, by means of the two legs 92' thereof, pairs of contact elements 93, which elastically project from at least one face of the two second stars 90 and electrically connected with the portions 60' of the first electrodes 6 housed in the second alveoli 91.

The portions 60' of the two electrodes may both be connected to the pulse generator 10 by means of the connection body or it may be provided for to supply only one of the two portions 60', given the use of the conductive martial and given the limited space of division between the two opposite portions 60', an arc being easily established between the two portions in case of discharge.

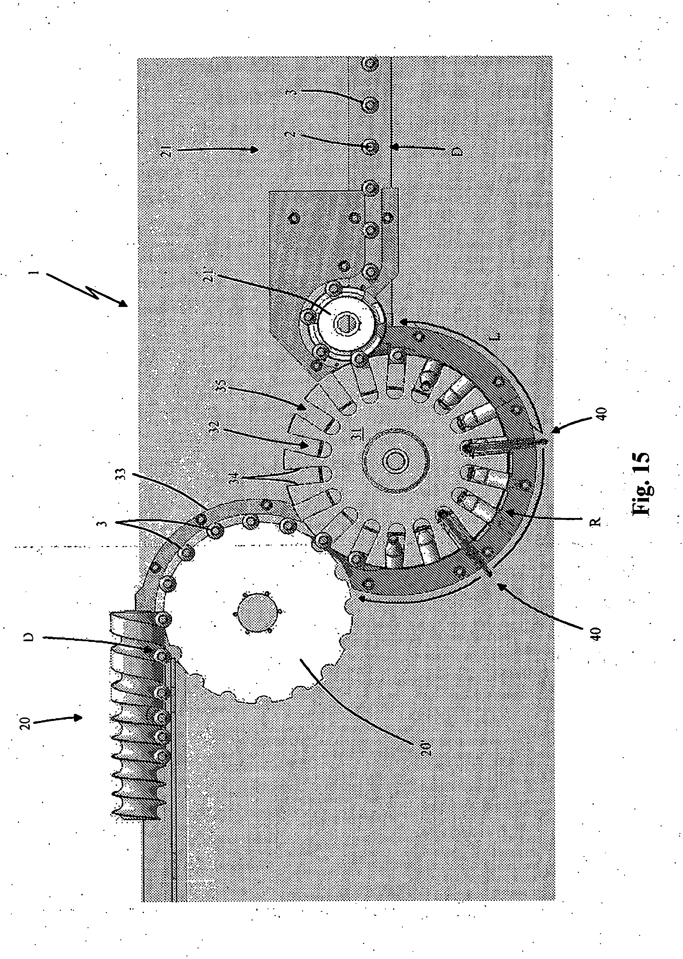

Figures 15-18 illustrate a fourth embodiment of the present invention, in which the apparatus 1 is still adapted to receive the containers from inlet means 20 and transfer them to outlet means 21 however conveying them, in this case along a substantially curvilinear trajectory and in particular with circumferential arc.

More in detail, the apparatus 1 comprises an inspection wheel 31, which is rotatably mounted on the support structure of the apparatus 1, and it is provided with a plurality of alveoli 32, within which it receives the containers 3 from the inlet means 20 and from which it transfers them to outlet means 21.

The inlet means 20, according to the particular non-limiting example represented in the attached figures, comprise a loading wheel indicated in the figure with the reference 20' while the outlet means comprise a loading extraction wheel indicated in the figure with the reference 21'.

The latter, rotating around the axis thereof, conveys the containers 3, maintaining them with the longitudinal axis in vertical position, up to inserting them still in vertical position into the alveoli 32 of the inspection wheel 31.

The loading wheel 20' and the inspection 31 are close to each other and they define a portion in substantial tangency within which by means of an exchange profile 33 there occurs the passage of the containers 3 from the cavities of the loading wheel 20 to the alveoli 32 of the inspection wheel 31.

Different inlet means different with respect to those described may however be used without departing from the scope of protection defined by the present patent and in particular an auger or a conveyor belt may be used.

The abovementioned inspection wheel 31, is rotatably mounted on the support structure and it is suitable to rotate around a rotational axis passing through the centre thereof due to driving means (not illustrated in the attached figures). Obviously, the movement of the two wheels 20' and 31 shall be phased so as to allow the cavities of the loading wheel 20' to be counterfaced with the alveoli 32 of the inspection wheel 31 to allow the displacement of the containers 3.

More in detail, each alveolus 32 of the inspection wheel 31 is delimited by two shoulders 34 distributed substantially radially on the wheel 31, which terminate with a through aperture 35 arranged peripherally on the inspection wheel 31.

The alveoli 32 are provided for along the circumference of the wheel 4, and they for example have a width equivalent to 10°. The containers 3 inserted between the shoulders 34 and projecting from the respective through aperture 35 with the bottom portion 3', slide in a capsizing cam 36 adapted to displace them between loading and unloading positions in which they are in straight position D, and at least partly capsized position R, in which the containers 3 perform the operative travel L thereof, and, for a measurement section T, they are subjected to the pulses of the generator 10 and to the measurements of the measurement device 1.

More in particular, each container 3, when taken up by an alveolus 32 of the inspection wheel 31 is interposed between a pair of shoulders 34 that hold them, at least partly, and slide it in the guide along a circumferential arc.

The tilting cam 36 is counterfaced to the outer circumference of the inspection wheel 31, in particular to a sector of the inspection wheel 31 for example by 200°.

The tilting cam 36 defines a cavity which serves as a tilting guide and houses the bottom portion 3' of the containers 3. Such guide is defined by a base profile 37 and by a pair of lateral profiles 38 substantially parallel with respect to each other to allow the guided sliding of the containers 3.

The previously mentioned support means 4 for supporting the containers 3, in this case guidably during the advancement thereof, can be obtained through different technical solutions and with reference to the specific solution illustrated in the attached figures they are formed by the alveoli 32 of the inspection wheel and by the cam guide 36.

Preferably, at least one first of the abovementioned lateral profiles, in particular the upper one, is provided with a rubber insert 80, adapted to impart a rotation to the container 3 along the longitudinal development axis thereof Y. Thus, the entire circumference of the cap 2 i.e. the entire surface of the sealing between the cap 2 and the opening of the container 3, rotates within the same first electrode 6 partly annular-shaped, as specified hereinafter, and it is thus subjected to the same conditions of electrical field guaranteeing an extremely accurate control.

The inclination of the cavity of the cam 36 varies along the curvilinear trajectory and in particular the vertical axis thereof at the inlet and outlet of the cam guide, and it is inclined by 100° with respect to the vertical in proximity of a central portion.

At the abovementioned central portion of the tilting cam 36, there is positioned at least one inspection station 40 (two stations in the example of the attached figure) for verifying the sealing of the caps 2 on the containers 3 through the pulse generator 10 and the measurement device 11 already described previously.

For such purpose, the inspection station 40, is fixed with respect to the rotation of the wheel 31, and supports - for the measurement section T of the operative travel L - the first electrode 6 at the passage trajectory of the caps of the containers 3, and the second electrode 7 at the widened portion 8 of the containers 3.

More in detail, each alveolus 32 houses - therein - a mobile portion 6' (i.e. a portion that moves alongside the wheel 31) of the first electrode 6. such mobile portion 6' perimetrally surrounds the container 3 housed in the alveolus 32 at the head 3" thereof i.e. in particular at the safety sealing of the cap 2, and it is counterfaced to a fixed portion 6" of the first electrode 6 integral with the inspection station 40.

The mobile portion 6' is at least partly annular-shaped and preferably U-shaped, with the concavity surrounding the cap 2 and it is faced with the two legs facing upwards. The latter contact, during the passage of the container in the measurement section T, the fixed portion 6" of the first electrode 6 preferably constituted by a metal plate.

The electrical connection between the mobile portion 6' and the fixed portion 6" may also be obtained without direct contact given the use of conductive material and given the little separation space, there may be easily established an arc between the two parts.

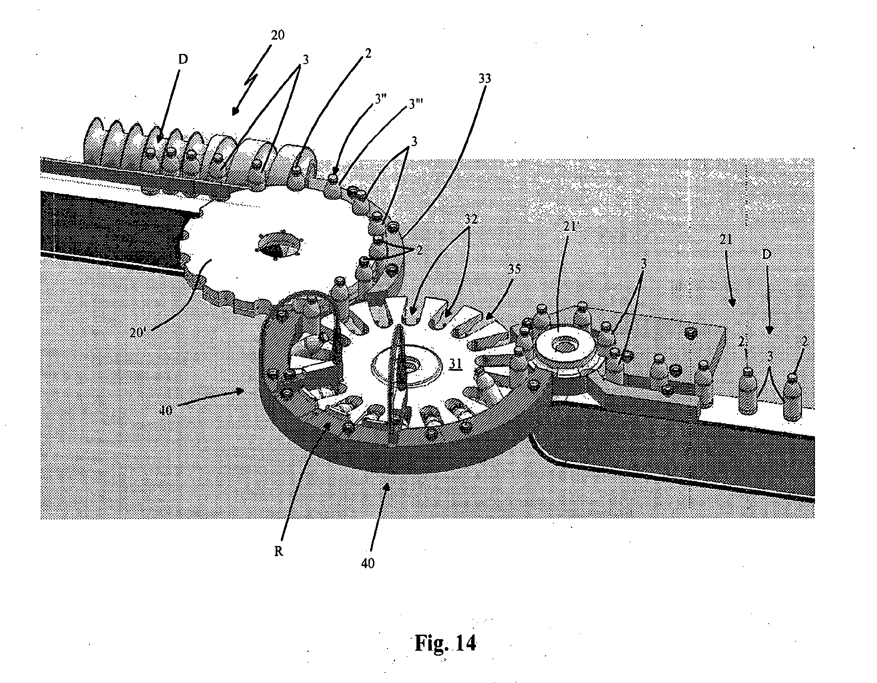

The second electrode 7 comprises a metal plate which continues a lateral profile 38 of the tilting guide as indicated in particular in figure 14.

Functionally, when the containers reach the inspection station 40 they contact for the measurement section T the two electrodes 6, 7 as indicated above and they are subjected to the voltage pulses and thus to the measurements of the discharges that are possibly established through the micro-holes present in the sealing.

According to an embodiment of the present invention, not illustrated in detail in the attached figures, the apparatus 1 may comprise a turntable (turret) suitable to rotate the containers along an arched operative travel taking them to associate through a measurement section the first and the second electrode respectively to the head and to the widened portion of the containers.

A method for controlling the sealing of a cap 2 on a container 3, which shall be described hereinafter with reference to the apparatus 1 described above, in which the nomenclature and numerical references shall be maintained for the sake of description simplicity also forms a subject of the present invention.

Initially, there is provided for a first step for tilting, at least partly, a container 3, so as to take the fluid for human consumption contained therein and having conductivity exceeding 0.5 µS/cm, at contact with the cap 2 and at contact with the widened portion 8 thereof.

There is then provided for the association step, in which the first electrode 6 is arranged at the cap 2, and in particular the safety sealing thereof, and a second association step, in particular by contact, in which the second electrode 7 is arranged at the widened portion 8 of the container 3, which is spaced from the cap 2 and internally wet by the liquid with the container 3 in at least partly capsized position R.

At this point, the step of generating at least one voltage pulse between the electrodes 6, 7 by means of the pulse generator 10 may be carried out. The latter, for example shall take the second electrode 7 to the earth and shall charge the first electrode 6 with negative voltage for example of 45 kvolt. At the same time, there occurs the step for measuring possible currents which starting from the first electrode 6 traverse the micro-holes present between the cap 2 and the opening of the container 3 before closing on the second electrode 7 after traversing the interposed liquid.

Furthermore, there is provided for a step for calculating, by means of the logic control unit of the apparatus 1, the current integrals generated by the voltage pulse.

The control unit of the measurement device 6 is thus easily capable of generating a discrimination step, in which it selects values of current integrals exceeding a preset threshold value (i.e., prudentially, greater than such increased threshold by a defined percentage) and produced by the currents between the two electrodes 6, 7 passing through the micro-holes present between the cap 2 and the opening of the container 3, to discriminate faulty containers from containers with aseptic sealing.

More in detail, the logic control unit in the discrimination step compares with the preset threshold value the modules of the current integrals, the latter being positive or negative depending on the sign of the voltage pulse produced by the pulse generator 10.

The discrimination step is followed by a step for discarding the containers 3 distinguished by values of current integrals exceeding the preset threshold value.

At the end of the measurement step there occurs a second tilting step, in which the containers 3 are displaced from at least partly capsized position R to the straight position D.

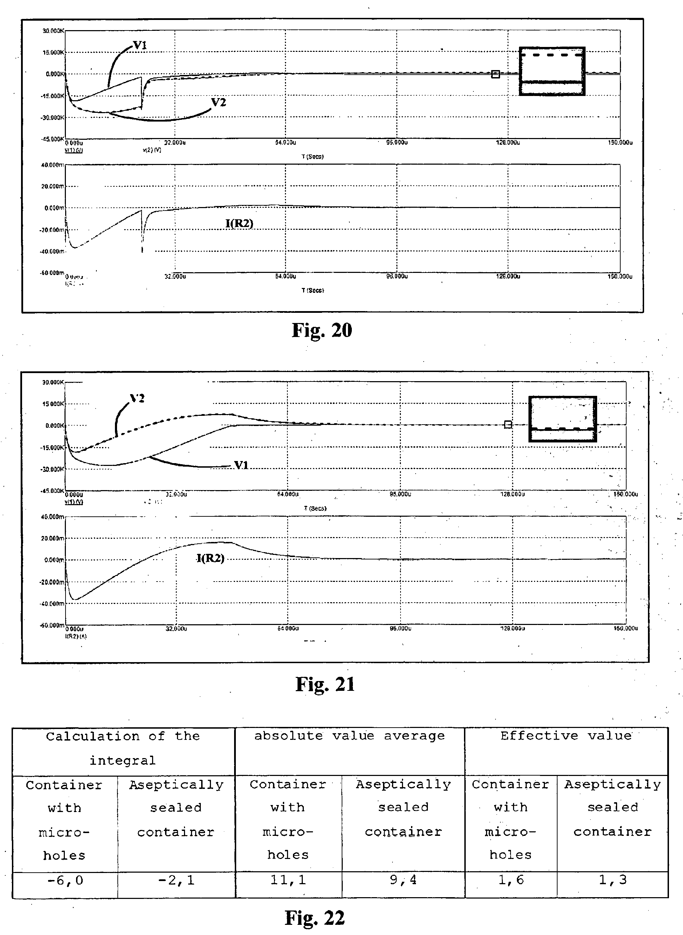

With reference to the equivalent electrical diagram illustrated in figure 19 and the exemplifying diagrams illustrated in figures 20 and 21, after the application of the voltage pulse by the pulse generator 10 on the first electrode 6, there is triggered an electrical arc X1 which short-circuits the first capacitive coupling C1 of the first electrode 6 with the container 3. Following the triggering of the electrical arc X1 there occurs the passage of the electrical current I(R2) through the container 3 between the two electrodes 6, 7 which leads to charging the second capacitive coupling C2 of the second electrode 7 with the container 3.

More in detail, with reference to the illustrated diagram in the example of figure 20, at the beginning of the voltage pulse the development of the voltage of the liquid V1 is substantially in phase with the current I(R2), the second capacitive coupling C2 being negligible with respect to the resistance R1 of the liquid at the frequency in which the phenomenon occurs (i.e. at the ascent and descent speed of the voltage pulse).

The voltage in the liquid V1 ascends more slowly with respect to the voltage V2 (indicated with a dashed line in the attached figures 20,21 ) of the pulse generator 10 on the first electrode 6. When the difference between the voltage of the liquid V1 and the voltage V2 of the electrode 6 is such to overcome the dielectric rigidity of air, there is triggered an electrical arc X1 which determines the current that leads to charging the second capacitive coupling C2.

The current produced following the trigger by the electrical arc X1 charges the second capacitive coupling C2 with an amount of charge that is substantially identical to the integral of the current which traverses the resistance R2 of the shunt.

Therefore, upon the interruption of the current the second capacitive coupling C2 remains charged with a residual charge to which there corresponds a voltage between the liquid and the second electrode 7 upon termination of the discharge phenomenon.

The transient of the current, after termination of the electrical arc X1, continues with the presence of the first capacitive coupling C1 parallel to the resistance R7 of the sealing of the cap 2 given that the first capacitive coupling C1 is no longer short-circuited by the electrical arc X1.

The waveform of the current I(R2) in case of faulty containers is distinguished by a development having an overall area unbalanced, i.e. with the positive and negative components thereof that do not compensate each other and determine an area with an overall positive or negative value depending on the value of the voltage pulse.

Correspondingly, at the end of the transient the voltage V2 of the first electrode 6 and the voltage V1 of the liquid reach different values given that while the first electrode 6 is taken to zero Volts i.e. to the earth voltage, the voltage V2 of the liquid is taken to the voltage corresponding to the residual charge on the second capacitive coupling C2.

Surprisingly, it was observed that, with reference to the electrical configuration illustrated in the embodiment of figure 19, the liquid in the container 3 at the end of the transient remains charged to the voltage due to the residual charge remaining in the liquid. The residual charge quantity depends on the development of the current I(R2), and thus definitely on the presence of micro-holes suitable to allow the transfer of discharge through the electrical arc X1, and not in a capacitive manner through the first capacitive coupling C1, on the second capacitive coupling C2.

In the container with aseptic sealing there may however occur slight discharge phenomena with low energy content which engage charges on the outer surface of the cap of the bottle and which are detected by the shunt as narrow (i.e. with low energy) by quite high current peaks. These peaks can generate current values which, though having low energy and thus not considerable to discriminate the containers with leakage, can generate false discarding in case of consideration of the maximum value of the currents alone as the parameter for discriminating of the containers.

With reference to the chart illustrated in the example of figure 21, in case of containers with aseptic sealing, the waveform of the current I(R2) is characterized by a development distinguished by an initial area and by a final area having an opposite sign which substantially - at the end of the transient - are equivalent with respect to each other in terms of value thus summing to zero. Correspondingly, at the end of the transient the voltage V1 of the first electrode 6 and the voltage V2 of the liquid reach the same value, preferably the earth value due to the capacitive and linear behaviour of the equivalent electrical circuit of the apparatus 1.

Advantageously, the measuring step of the method subject of the present invention provides for that the measurement device 11 detects an electrical quantity relative to the residual charge quantity in the liquid which forms the second armour of the second capacitive coupling C2. More in detail, the measurement device 11 detects a measurement voltage at the ends of the resistance R2 of the shunt, such tension being proportional to the current I(R2) which traverses the shunt and the second capacitive coupling C2. The logic control unit, in the abovementioned calculation step, calculates the integral of such current I(R2), such integral is equivalent to the residual charge in the second capacitive coupling C2, and thus indicating the residual charge in the liquid.

Advantageously, the step of discrimination of the method subject of the present invention associates waveforms of the current I(R2), having an overall area unbalanced in the positive and negative components thereof during the transient of the voltage pulse and calculated during the abovementioned measurement step of the current I(R2), to containers 3 provided with micro-holes present between the cap 2 and the opening of the container 3.

Advantageously, the step of generating voltage pulses provides for generating one or more sequences of voltage pulses (burst) for a determined measurement period, preferably by means generating sequences of period voltage pulses T^{on} of 10 ms at 800 Hz and at 45 KVolt of a peak value, alternating with periods of T^{off} of 1 ms to avoid the overheating of the coil of the voltage elevator transformer of the pulse generator 10.

Advantageously, the step of measuring currents calculates the value of the overall integral of the currents, produced following the application of each sequence of pulses, relative to the entire sequence of pulses, and preferably selects the maximum current integrals value from among the values of the overall integrals of all pulse sequences produced by the pulse generator 10 during the measurement interval.

The discrimination step discriminates, by means of the logic control unit, the values of maximum current integrals greater than the preset threshold value and indicating of the presence of micro-holes in the sealing of the container 3.

In case of faulty containers at the end of the discharge transient the voltage on the second capacitive coupling C2 is not null due to accumulation of charge in the liquid. Therefore, when the pulse generator 10 produces a subsequent voltage pulse having the same sign as the first one, the current I(R2) would be smaller and thus the amount of charge that could accumulate further following such second discharge in the liquid could be lower. Definitely, the areas subtended by the development of the current I(R2), i.e. the further residual charge on the second capacitive coupling C2, would be lower thus complicating the measurement. Furthermore, given the presence of a residual charge on the second capacitive coupling C2 and thus a voltage in the liquid there arises the drawback of having less possibilities of triggering the electrical arc X1 .

Advantageously, according to a preferred embodiment of the present invention, at least two pulses in succession of each sequence of voltage pulses produced by the pulse generator 10 have an opposite sign. More in detail, each voltage pulse 10 is applied by the pulse generator 10 with a voltage having a sign opposite to that of the previous voltage pulse, such voltage having an opposite sign which, summed to the voltage on the capacitive coupling C2, determines a current I(R2) having greater intensity and thus greater accumulation of charge in the liquid with ensuing greater unbalancing of the area subtended by the development of the current I(R2).

According to an important characteristic of the present invention, it is strictly necessary to apply between the two electrodes 6, 7 a voltage having an actual pulse development, through advantageously bipolar (i.e. with the voltage pulses generated alternatingly with opposite sign). The use of the voltage having a pulse development according to the invention advantageously allows using small pulse generators, with simple electronic system and low energy consumption, particularly contrary to the methods of the prior art which provide for the application of a sinusoidal development voltage, which requires use of sinusoidal voltage generators with particularly complex and costly electronics as well as considerable energy consumption during operation thereof. Advantageously, there is also provided for a step for the initial calibration in which there are defined the abovementioned threshold values indicating containers with aseptic sealing. More in detail, in the calibrating step there are defined of current integrals and current intensity values indicating containers 3 capable of offering a good sealing over time, i.e. they do not reveal considerable discharge phenomena. The abovementioned step calibrating step defines the abovementioned threshold values for the specific applications, in particular for considering the liquid contained in the container (i.e. in particular the conductivity thereof) i.e. the shape of the container 3 and the characteristics of the caps 2.

Surprisingly, the discrimination of containers with sealing from faulty containers by analysing the current integrals according to the method subject of the present invention, allows obtaining values indicating the presence of micro-holes that is much more reliable with respect to methods of the known type which provide for analysing the mean of the absolute value or of the efficient value, as observable from the results regarding an implementation example indicated in the table of figure 22. The finding thus conceived attains the preset objects.

Obviously, the shape and configurations of the invention may vary in the practical embodiment thereof with respect to those illustrated above without departing from the scope of protection. Furthermore, all the details may be replaced by technically equivalent elements and the dimensions, shapes and materials used may vary according to the requirements.

## Claims

1. Method for controlling the sealing of a cap on a container which comprises the following operating steps:
- a first step of at least partly tilting a container (3) carrying mounted a cap (2) arranged to close the opening thereof and containing a liquid for human consumption therein with conductivity exceeding 0.5 µS/cm; said container (3) being arranged in at least a partly capsized position (R) in which it wets with said liquid for human consumption contained therein said cap (2) and at least one widened portion (8) of said container (3);
- a first step of associating - to said container (3) - a first electrode (6) having a first capacitive coupling (C1) with the container (3) at said cap (2), and in particular at the sealing thereof;
- a second step of associating - to said container (3) - a second electrode (7) having a second capacitive coupling (C2) with the container (3), at the widened portion (8) thereof spaced from said cap (2); said second capacitive coupling (C2) being made up of a first armour constituted by said second electrode (7) and by a second armour constituted by said liquid contained in said container (3), with the dielectric material of the latter interposed between said second electrode (7) and the second armour constituted by said liquid;
- a step of generating at least one voltage pulse between said electrodes (6, 7);
- a step for measuring the currents between said electrodes (6, 7) due to said at least one voltage pulse;
- a second step of tilting said container (3) from said at least partly capsized position (R) to a straight position (D);
said method being **characterized in that** said measurement step provides for that a measurement device (11) detects an electrical quantity relative to the residual charge quantity in the liquid, such liquid forming the second armour of said second capacitive coupling (C2);
and said method further comprising:
- a step for calculating, by means of a logic control unit, the integrals of the currents generated by said at least one voltage pulse, such integrals being equivalent to the residual charge in said second capacitive coupling (C2), and thus indicating the residual charge in the liquid;
- a discrimination step, which selects, by means of said logic control unit, values of current integrals exceeding a preset threshold value of current integral produced by said currents between the abovementioned electrodes (6, 7) passing through micro-holes present between the cap (2) and the opening of the container (3), to discriminate faulty containers (3) from containers (3) with aseptic sealing.

2. Method according to claim 1, **characterized in that** said step of discrimination associates waveforms of said currents having an overall area unbalanced in the positive and negative components thereof during the transient of said pulse, calculated during said step of measuring said currents, to containers (3) provided with micro-holes present between the cap (2) and the opening of said container (3).

3. Method according to claim 1, **characterized in that** said step of generating voltage pulses provides for generating one or more sequences of voltage pulses, and **characterized in that** said step of measuring currents calculates the value of the overall integral of the current relative to each said sequence of pulses.

4. Method according to claim 3, **characterized in that** at least two pulses in succession of said sequence of voltage pulses have an opposite sign.

5. Apparatus (1) for controlling the sealing of a cap on a container (3), of the type containing a liquid for human consumption therein with conductivity exceeding 0.5 µS/cm, carrying mounted a cap (2) arranged to close an opening of the container (3); said apparatus (1) comprising:
- support means (4) for holding said container (3) in at least partly capsized position (R) with said liquid at contact with said cap (2);
- a first electrode (6) adapted to have a first capacitive coupling (C1) with the container (3) and associated to said container (3) at said cap (2);
- a second electrode (7) adapted to have a second capacitive coupling (C2) with the container associated to said container (3) at a widened portion (8) thereof spaced from said cap (2) and internally wet by said liquid; said second capacitive coupling (C2) being made up of a first armour constituted by said second electrode (7) and by a second armour constituted by said liquid contained in said container (3), with the dielectric material of the latter interposed between said second electrode (7) and the second armour constituted by said liquid;
- a pulse generator (10), adapted to supply said electrodes (6, 7) with at least one voltage pulse;
- a measurement device (11) adapted to measure currents between said electrodes (6, 7) due to said at least one voltage pulse;
said apparatus (1) being **characterized in that** sad measurement device (11) is adapted to detect an electrical quantity relative to the residual charge quantity in the liquid, such liquid being adapted to form the second armour of said second capacitive coupling (C2),
and said apparatus (1) further comprising:
- a logic control unit, adapted to receive the measurements of current from said measurement device (11) and to calculate the values of current integrals, such integrals being equivalent to the residual charge in said second capacitive coupling (C2) and thus indicating the residual charge in the liquid, said logic control unit being adapted to select the values exceeding a preset threshold value of current integral, produced by said currents between said electrodes (6, 7) passing through micro-holes present between the cap (2) and the opening of the container (3), to discriminate corresponding faulty containers (3) from containers (3) with aseptic sealing.

6. Apparatus (1) according to claim 5, **characterized in that**:
- said first electrode (6) has a substantially annular shape with which it externally winds at least partly said cap (2) and
- the second capacitive coupling (C2) of said second electrode (7) with the container (3) is greater than the first capacitive coupling (C1) of said first electrode (6) with the container (3), in particular more than 10 times, to increase the electrical field produced by said voltage pulses at said first electrode (6).

7. Apparatus (1) according to claim 5, **characterized in that** said pulse generator (10) is configured to apply to said electrodes (6, 7) said voltage pulses with peak value comprised between 1 kV and 70 kV and continuing preferably organized in pulse sequences, for a measurement period duration comprised in the range between 20-130 ms.

8. Apparatus (1) according to claim 5, **characterized in that** said first electrode (6) comprises at least one first annular portion (12) internally provided with a plurality of projecting tips (13) facing towards said container (3) to increase the electrical field with said cap (2) associated to said first electrode (6).

9. Apparatus (1) according to claim 5, **characterized in that** it comprises first tilting means (22), suitable to capsize said container (3) from a straight position (D), in which it rests on the support base thereof, to said at least partly capsized position (R), in which it is associated to said first electrode (6); advancement means (23) adapted to displace said container (3) in said at least partly capsized position (R), guidably along an operative travel (L); said second electrode (7) contacting said widened portion (8) of said container (3) in said at least partly capsized position (R), for at least one measurement section (T) of said operative travel (L) in which said pulse generator (10) supply said electrodes (6, 7) with said voltage pulses and said measurement device (11) measures said passages of current between said electrodes (6, 7); second tilting means (24), suitable to capsize said container (3) from said at least partly capsized position (R), in which it is associated to said first electrode (6) to said straight position (D), in which it rests on the bottom thereof.

10. Apparatus according to claim 9, **characterized in that** said advancement means (23) comprise a conveyor belt (60), which is configured to advance in phase with the advancement of said containers (3) and mounts fixed equally spaced with respect to each other said first electrodes (6) suitable to be coupled to the heads of said containers (3) along said operative travel (L).

11. Apparatus (3) according to claim 9, **characterized in that** said first electrode (6) provides a sliding contact with a fixed electrode (26) integral with the support structure of said apparatus (1) for at least said measurement section (T) of said operative travel (L) of said container (3) which advances in said at least partly capsized position (R).

12. Apparatus (3) according to claim 9, **characterized in that** said second electrode (7) is formed by an extended plate or sheet made of conductor material, fixed with respect to said container (3) which advances, and sliding at contact with said widened portion (8) of said container (3) for at least said measurement section (T) of said operative travel (L) of said container (3) which advances in said at least partly capsized position (R).

13. Apparatus (1) according to claim 9, **characterized in that** it comprises at least one first star (27), in particular with vertical rotation axis, arranged to intercept said operative travel, provided with a plurality of alveoli (28), which receive - therein - said containers (3) which advance in said at least partly capsized position (R) along said operative travel (L); said alveoli (28) mounting - internally - said second electrodes (7), electrically connected with said pulse generator (10) by means of sliding contacts, and suitable to contact said widened portion (8) of said container (3) for said measurement section (T) of said operative travel (L).

14. Apparatus (1) according to claim 9, **characterized in that** it comprises at least one pair of second starts (90), in particular with horizontal rotational axis, arranged to intercept said operative travel (L), each said second star (90) being provided with a plurality of second alveoli (91), which receive - therein - the caps (2) of said containers (3) which advance in said at least partly capsized position (R) along said operative travel (L); said second alveoli (91) mountining - internally - said first electrodes (6), suitable to be coupled with respect to each other to form a substantially closed ring around said cap (2) for at least said section of measuring said operative travel (L).

## Patentansprüche

1. Verfahren zur Kontrolle der Dichtung eines Deckels auf einem Behälter, das die folgenden Phasen umfasst:
- eine erste Phase des wenigstens teilweisen Kippens eines Behälters (3), der einen Deckel (2) trägt, der als Verschluss auf seiner Mündung positioniert ist und in seinem Inneren eine trinkbare Flüssigkeit mit einer Leitfähigkeit von mehr als 0,5 µS/cm enthält; wobei der genannte Behälter (3) in einer wenigstens teilweise gekippten Position (R) angeordnet ist, in der mit der genannten, in seinem Inneren enthaltenen trinkbaren Flüssigkeit der genannte Deckel (2) und wenigstens ein verbreiterter Abschnitt (8) des genannten Behälters (3) befeuchtet wird;
- eine erste Phase des Anbringens einer ersten Elektrode (6) an dem genannten Behälter (3), die eine erste kapazitive Ankopplung (C1) mit dem Behälter (3) auf dem genannten Deckel (2) und insbesondere auf einem Garantiesiegel aufweist;
- eine zweite Phase des Anbringens einer zweiten Elektrode (7) an dem genannten Behälter (3), die eine zweite kapazitive Ankopplung (C2) mit dem Behälter (3) auf seinem verbreiterten Abschnitt (8) von dem genannten Deckel (2) entfernt aufweist; wobei die genannte zweite kapazitive Ankopplung (C2) sich aus einer ersten leitenden Struktur, die aus der genannten zweiten Elektrode (7) besteht, und einer zweiten leitenden Struktur, die aus der genannten, in dem genannten Behälter (3) enthaltenen Flüssigkeit besteht, zusammensetzt, wobei das dielektrische Material des Letzteren zwischen die genannte zweite Elektrode (7) und die zweite aus der genannten Flüssigkeit bestehende leitende Struktur eingefügt ist;
- eine Phase der Erzeugung wenigstens eines Spannungsimpulses zwischen den genannten Elektroden (6, 7);
- eine Phase des Messens der durch einen genannten wenigsten einen Spannungsimpuls erzeugten Ströme zwischen den genannten Elektroden (6, 7);
- eine zweite Phase des Kippens des genannten Behälters (3) aus der genannten, wenigstens teilweise gekippten Position (R) in eine aufrechte Position (D);
wobei diese Methode **dadurch gekennzeichnet ist, dass** die genannte Messphase vorsieht, dass eine Messvorrichtung (11) eine elektrische Größe in Bezug auf die Menge der Restladung in der Flüssigkeit erfasst, welche die zweite leitende Struktur der genannten kapazitiven Ankopplung (C2) bildet;
wobei die genannte Methode außerdem Folgendes umfasst:
- eine Phase der Berechnung der Integrale der von dem genannten wenigstens einen Spannungsimpuls erzeugten Ströme anhand einer logischen Steuerung , wobei die genannten Integrale mit der Restladung in der genannten zweiten kapazitiven Ankopplung (C2) äquivalent sind, die daher die Restladung in der Flüssigkeit angibt;
- eine Phase der Unterscheidung, die mittels der genannten logischen Steuerung Stromintegralwerte über einem bestimmten Stromintegralschwellenwert wählt, die von den genannten Strömen zwischen den oben genannten Elektroden (6, 7) erzeugt werden und durch zwischen Deckel (2) und Mündung des Behälters (3) vorhandene Mikroöffnungen fließen, um defekte Behälter (3) von Behältern (3) mit aseptischer Dichtung zu unterscheiden;

2. Verfahren nach Anspruch 1, **dadurch gekennzeichnet, dass** die genannte Unterscheidungsphase Wellenformen der genannten Ströme mit einem in seinem positiven und negativen Anteil unausgewogenen Gesamtbereich während des Durchgangs des genannten Impulses, die während der genannten Phase des Messens der genannten Ströme berechnet wurden, mit Mikroöffnungen zwischen Deckel (2) und Mündung des genannten Behälters (3) versehenen Behältern (3) zuordnet.

3. Verfahren nach Anspruch 1, **dadurch gekennzeichnet, dass** die genannte Phase der Spannungsimpulserzeugung die Erzeugung von einer oder zwei Spannungsimpulssequenzen vorsieht und **dadurch gekennzeichnet ist, dass** die genannte Phase des Messens der Ströme den Wert des Gesamtstromintegrals in Bezug auf jede der genannten Impulssequenzen berechnet.

4. Verfahren nach Anspruch 3, **dadurch gekennzeichnet, dass** mindestens zwei auf die genannte Spannungsimpulssequenz folgende Impulse entgegengesetzte Polarität aufweisen.

5. Vorrichtung (1) zur Kontrolle der Dichtung eines Deckels auf einem Behälter (3) des Typs mit trinkbarer Flüssigkeit in seinem Inneren, deren Leitfähigkeit über 0,5 µS/cm liegt, auf dem ein Deckel (2) als Verschluss einer Mündung des Behälters (3) montiert ist; wobei die genannte Vorrichtung (1) Folgendes umfasst:
- Trägerelemente (4), um den genannten Behälter (3) in wenigstens teilweise gekippter Position (R) zu halten, wobei die genannte Flüssigkeit sich mit dem genannten Deckel (2) in Kontakt befindet;
- eine erste Elektrode (6), die geeignet ist, eine erste kapazitive Ankopplung (C1) mit dem Behälter (3) aufzuweisen und mit dem genannten Behälter (3) auf dem genannten Deckel (2) verbunden ist;
- eine zweite Elektrode (7), die geeignet ist, eine zweite kapazitive Ankopplung (C2) mit dem dem genannten Behälter (3) zugeordneten Behälter auf seinem verbreiterten und im Inneren von der genannten Flüssigkeit befeuchteten Abschnitt (8) im Abstand zu dem genannten Deckel (2) aufzuweisen; wobei die genannte zweite kapazitive Ankopplung (C2) sich aus einer ersten leitenden Struktur zusammensetzt, die aus der genannten zweiten Elektrode (7) besteht, und aus einer zweiten leitenden Struktur, die aus der genannten, in dem genannten Behälter (3) enthaltenen Flüssigkeit besteht, wobei das dielektrische Material des Letzteren zwischen die genannte zweite Elektrode (7) und die zweite aus der genannten Flüssigkeit bestehende leitende Struktur eingefügt ist;
- einen Impulsgenerator (10), der geeignet ist, die genannten Elektroden (6, 7) mit mindestens einem Spannungsimpuls zu speisen;
- eine Messvorrichtung (11), die geeignet ist, Ströme durch den genannten wenigstens einen Spannungsimpuls zwischen den genannten Elektroden (6, 7) zu messen;
wobei die genannte Vorrichtung (1) **dadurch gekennzeichnet ist, dass** die genannte Messvorrichtung (11) geeignet ist, eine elektrische Größe in Bezug auf die Menge der Restladung in der Flüssigkeit zu messen, da die genannte Flüssigkeit geeignet ist, die zweite leitende Struktur der genannten zweiten kapazitiven Ankopplung (C2) zu bilden und die genannte Vorrichtung (1) außerdem Folgendes umfasst:
- eine logische Steuerung, die geeignet ist, die Strommessungen von der genannten Messvorrichtung (11) zu empfangen und die Stromintegralwerte zu berechnen, wobei die genannten Integrale äquivalent zu der Restladung in der genannten zweiten kapazitiven Ankopplung (C2) sind und daher die Restladung in der Flüssigkeit angeben, da die genannte logische Steuerung geeignet ist, die Werte über einem bestimmten Stromintegralschwellenwert auszuwählen, die von den genannten Strömen zwischen den genannten Elektroden (6, 7) erzeugt werden, die über Mikroöffnungen zwischen Deckel (2) und Mündung des Behälters (3) fließen, um entsprechende defekte Behälter (3) von Behältern (3) mit aseptischer Dichtung zu unterscheiden.

6. Vorrichtung (1) nach Anspruch 5, **dadurch gekennzeichnet, dass**:
- die genannte erste Elektrode (6) eine im Wesentlichen ringförmige Gestalt aufweist, mit der sie den genannten Deckel (2) von außen wenigstens zum Teil umhüllt und
- die zweite kapazitive Ankopplung (C2) der genannten zweiten Elektrode (7) mit dem Behälter (3) größer als die erste kapazitive Ankopplung (C1) der genannten ersten Elektrode (6) mit dem Behälter (3) ist, insbesondere mehr als 10 Mal, um das von den genannten Spannungsimpulsen auf der genannten ersten Elektrode (6) erzeugte elektrische Feld zu erhöhen.

7. Vorrichtung (1) nach Anspruch 5, **dadurch gekennzeichnet, dass** der genannte Impulsgenerator (10) dazu konfiguriert ist, auf die genannten Elektroden (6, 7) die genannten Spannungsimpulse mit einem Spitzenwert zwischen 1 kV und 70 kV anzuwenden, die vorzugsweise in Impulssequenzen in einem Messzeitraum mit einer Dauer zwischen 20-130 ms vorliegen.

8. Vorrichtung (1) nach Anspruch 5, **dadurch gekennzeichnet, dass** die genannte erste Elektrode (6) wenigstens einen ersten ringförmigen, innen mit einer Vielzahl vorstehender Spitzen (13), die zu dem genannten Behälter (3) gerichtet sind, versehenen Abschnitt (12) umfasst, um das elektrische Feld mit dem genannten Deckel (3) zu erhöhen, der mit der ersten Elektrode (6) verbunden ist.

9. Vorrichtung (1) nach Anspruch 5, **dadurch gekennzeichnet**, erste Kippelemente (22) zu umfassen, die den genannten Behälter (3) aus einer aufrechten Position (D), in der er auf einer Auflage abgestützt ist, in die genannte, wenigstens teilweise gekippte Position (R) bringen können, in der er mit der genannten ersten Elektrode (6) verbunden ist; Vorschubelemente (23), die geeignet sind, den genannten Behälter (3) entlang eines Verfahrwegs (L) in die genannte wenigstens teilweise gekippte Position (R) zu bringen; wobei die genannte zweite Elektrode (7) sich im Kontakt mit dem genannten verbreiterten Abschnitt (8) des genannten Behälters (3) in der genannten, wenigstens teilweise gekippten Position (R) auf wenigstens einem Messabschnitt (T) des genannten Verfahrwegs (L), in dem der genannte Impulsgenerator (10) die genannten Elektroden (6, 7) mit den genannten Spannungsimpulsen speist, befindet und die genannte Messvorrichtung (11) die genannten Stromdurchgänge zwischen den genannten Elektroden (6, 7) misst; zweite Kippelemente (24), die den genannten Behälter (3) aus der genannten, wenigstens teilweise gekippten Position (R) umdrehen können, in der dieser mit der genannten ersten Elektrode (6) in der genannten aufrechten Position (D) verbunden ist, in der er auf dem Boden aufliegt.

10. Vorrichtung nach Anspruch 9, **dadurch gekennzeichnet, dass** die genannten Vorschubelemente (23) ein Transportband (60) umfassen, das darauf ausgelegt ist, sich im Einklang mit dem Vorschub der genannten Behälter (3) vorwärts zu bewegen und auf dem in gleichem Abstand zueinander die genannten ersten Elektroden (6) montiert sind, die sich mit den Köpfen der genannten Behälter (3) entlang des genannten Verfahrwegs (L) verbinden können.

11. Vorrichtung (3) nach Anspruch 9, **dadurch gekennzeichnet, dass** die genannte erste Elektrode (6) einen Schleifkontakt mit einer festen Elektrode (26) herstellt, die wenigstens auf der Länge des Messabschnitts (T) des genannten Verfahrwegs (L) des genannten Behälters (3), der in der genannten wenigstens teilweise gekippten Position (R) vorgeschoben wird, fest mit der Trägerstruktur der genannten Vorrichtung (1) verbunden ist.

12. Vorrichtung (3) nach Anspruch 9, **dadurch gekennzeichnet, dass** die genannte zweite Elektrode (7) aus einer länglichen Platte oder einem länglichen Blech aus leitendem Material besteht, die im Vergleich zu dem genannten Behälter (3), der vorgeschoben wird, fest ist und einen Schleifkontakt mit dem genannten verbreiterten Abschnitt (8) des genannten Behälters (3) wenigstens auf der Länge des Messabschnitts (T) des genannten Verfahrwegs (L) des genannten Behälters (3) aufweist, der in der genannten wenigstens teilweise gekippten Position (R) vorgeschoben wird.

13. Vorrichtung (1) nach Anspruch 9, **dadurch gekennzeichnet**, wenigstens einen ersten Stern (27) zu umfassen, insbesondere mit senkrechter Drehachse, der so angeordnet ist, dass er den genannten Verfahrweg schneidet, und mit einer Vielzahl von Zellen (28) ausgestattet ist, die in ihrem Inneren die genannten Behälter (3) aufnehmen, die in der genannten wenigstens teilweise gekippten Position (R) entlang des Verfahrwegs (L) vorgeschoben werden; wobei im Inneren der genannten Zellen (28) die genannten zweiten Elektroden (7) montiert sind, die elektrisch an den genannten Impulsgenerator (10) mittels Schleifkontakten angeschlossen und geeignet sind, den Kontakt mit dem genannten verbreiterten Abschnitt (8) des genannten Behälters (3) auf dem genannten Messabschnitt (T) des genannten Verfahrwegs (L) herzustellen.

14. Vorrichtung (1) nach Anspruch 9, **dadurch gekennzeichnet**, wenigstens ein Paar zweiter Sterne (90) zu umfassen, insbesondere mit waagerechter Drehachse, die so angeordnet ist, dass sie den genannten Verfahrweg (L) schneidet, wobei jeder der genannten zweiten Sterne (90) mit einer Vielzahl von zweiten Zellen (91) ausgestattet ist, die in ihrem Inneren die Deckel (2) der genannten Behälter (3) aufnehmen, die in der genannten wenigstens teilweise gekippten Position (R) entlang des genannten Verfahrwegs (L) vorgeschoben werden; wobei im Inneren der genannten zweiten Zellen (91) die genannten ersten Elektroden (6) montiert sind, die miteinander verbunden werden können, um einen im Wesentlichen geschlossenen Ring um den genannten Deckel (2) herum auf wenigstens dem genannten Messabschnitt (T) des genannten Verfahrwegs (L) zu bilden.

## Revendications

1. Procédé de contrôle de l'étanchéité d'un capuchon de récipient, lequel comprend les phases opérationnelles suivantes :
- une première phase de renversement au moins partiel d'un récipient (3) portant monté un capuchon (2) servant de fermeture de son goulot et contenant à l'intérieur un fluide alimentaire avec conductibilité supérieure à 0,5 µS/cm ; ledit récipient (3) étant placé sur une position au moins partiellement renversée (R) dans laquelle il mouille par ledit fluide alimentaire contenu à son intérieur ledit capuchon (2) et au moins une partie élargie (8) dudit récipient (3) ;
- une première phase d'association audit récipient (3), d'une première électrode (6) ayant un premier accouplement capacitif (C1) avec le récipient (3) au niveau dudit capuchon (2), et en particulier au niveau de son sceau de garantie ;
- une deuxième phase d'association audit récipient (3), d'une deuxième électrode (7) ayant un deuxième accouplement capacitif (C2) avec le récipient (3), au niveau de sa partie élargie (8) distancée dudit capuchon (2) ; ledit deuxième accouplement capacitif (C2) étant composé d'une première armature constituée de ladite deuxième électrode (7) et d'une deuxième armature constituée dudit liquide contenu dans ledit récipient (3), avec le matériau diélectrique de ce dernier interposé entre ladite deuxième électrode (7) et la deuxième armature constituée dudit liquide ;
- une phase de génération d'au moins une impulsion de tension entre lesdites électrodes (6, 7);
- une phase de mesure de courants entre lesdites électrodes (6, 7) dus à ladite au moins une impulsion de tension ;
- une deuxième phase de renversement dudit récipient (3) de ladite position au moins partiellement renversée (R) à une position droite (D) ;
ledit procédé étant **caractérisé en ce que** ladite phase de mesure prévoit qu'un dispositif de mesure (11) relève une grandeur électrique relative à la quantité de charge résiduelle dans le liquide, lequel liquide forme la deuxième armature dudit deuxième accouplement capacitif (C2) ;
et ledit procédé comprenant en outre :
- une phase de calcul, au moyen d'une unité de contrôle logique, des intégrales des courants générés par ladite au moins une impulsion de tension, lesdites intégrales étant équivalentes à la charge résiduelle dans ledit deuxième accouplement capacitif (C2), et par conséquent indicative de la charge résiduelle dans le liquide ;
- une phase de discrimination, laquelle sélectionne, au moyen de ladite unité de contrôle logique, des valeurs d'intégrale de courant supérieures à une valeur préétablie de seuil d'intégrale de courant produites par lesdits courants entre les susdites électrodes (6, 7) passant à travers des microtrous présents entre capuchon (2) et goulot du récipient (3) pour discriminer récipients (3) défectueux de récipients (3) à étanchéité aseptique ;

2. Procédé selon la revendication 1, **caractérisé en ce que** ladite phase de discrimination associe des formes d'onde desdits courants, ayant une surface totale déséquilibrée dans ses composantes positive et négative, pendant le transitoire de ladite impulsion, calculées pendant ladite phase de mesure desdits courants, à des récipients (3) dotés de microtrous présents entre capuchon (2) et goulot dudit récipient (3).

3. Procédé selon la revendication 1, **caractérisé en ce que** ladite phase de génération d'impulsions de tension prévoit la génération d'une ou de plusieurs séquences d'impulsions de tension, et **caractérisé en ce que** ladite phase de mesure de courants calcule la valeur de l'intégrale totale du courant relative à chacune desdites séquences d'impulsions.

4. Procédé selon la revendication 3, **caractérisé en ce qu'**au moins deux impulsions en succession de ladite séquence d'impulsions de tension ont signe opposé.

5. Appareil (1) de contrôle de l'étanchéité d'un capuchon d'un récipient (3), de type contenant à son intérieur un fluide alimentaire avec conductibilité supérieure à 0,5 µS/cm, portant monté un capuchon (2) servant de fermeture d'un goulot du récipient (3) ; ledit appareil (1) comprenant :
- des moyens de support (4) pour retenir ledit récipient (3) en position au moins partiellement renversée (R) avec ledit liquide en contact avec ledit capuchon (2) ;
- une première électrode (6) apte à avoir un premier accouplement capacitif (C1) avec le récipient (3) et associé audit récipient (3) au niveau dudit capuchon (2) ;
- une deuxième électrode (7) apte à avoir un deuxième accouplement capacitif (C2) avec le récipient associé audit récipient (3) au niveau d'une de ses parties élargies (8) distancée dudit capuchon (2) et entièrement mouillée par ledit liquide ; ledit deuxième accouplement capacitif (C2) étant composé d'une première armature constituée de ladite deuxième électrode (7) et d'une deuxième armature constituée dudit liquide contenu dans ledit récipient (3), avec le matériau diélectrique de ce dernier interposé entre ladite deuxième électrode (7) et la deuxième armature constituée dudit liquide ;
- un générateur d'impulsions (10), apte à alimenter lesdites électrodes (6, 7) par au moins une impulsion de tension ;
- un dispositif de mesure (11) apte à mesurer des courants entre lesdites électrodes (6, 7) dus à ladite au moins une impulsion de tension ;
ledit appareil (1) étant **caractérisé en ce que** ledit dispositif de mesure (11) est apte a relever une grandeur électrique relative à la quantité de charge résiduelle dans le liquide, ledit liquide étant apte à former la deuxième armature dudit deuxième accouplement capacitif (C2),
et ledit appareil (1) comprenant en outre :
- une unité de contrôle logique, apte à recevoir les mesures de courant dudit dispositif de mesure (11) et à calculer les valeurs d'intégrale de courant, lesdites intégrales étant équivalentes à la charge résiduelle dans ledit deuxième accouplement capacitif (C2) et par conséquent indicative de la charge résiduelle dans le liquide, ladite unité de contrôle logique étant apte à sélectionner les valeurs supérieures à une valeur préétablie de seuil d'intégrale de courant, produites par lesdits courants entre lesdites électrodes (6, 7) passant à travers des microtrous présents entre capuchon (2) et goulot du récipient (3) pour discriminer correspondants récipients (3) défectueux de récipients (3) à étanchéité aseptique.

6. Appareil (1) selon la revendication 5, **caractérisée en ce que** :
- ladite première électrode (6) a une forme essentiellement annulaire avec laquelle entoure à l'extérieur au moins partiellement ledit capuchon (2) et
- le deuxième accouplement capacitif (C2) de ladite deuxième électrode (7) avec le récipient (3) est plus grand que le premier accouplement capacitif (C1) de ladite première électrode (6) avec le récipient (3), en particulier de plus de 10 fois, pour augmenter le champ électrique produit par lesdites impulsions de tension au niveau de ladite première électrode (6).

7. Appareil (1) selon la revendication 5, **caractérisé en ce que** ledit générateur d'impulsions (10) est configuré pour appliquer auxdites électrodes (6, 7) lesdites impulsions de tension avec valeur de crête comprise entre 1 kV et 70 kV et qui se prolongent, organisées de préférence en séquences d'impulsions, pour une période de mesure de durée comprise dans l'intervalle entre 20-130 ms.

8. Appareil (1) selon la revendication 5, **caractérisé en ce que** ladite première électrode (6) comprend au moins une première partie annulaire (12) pourvue à l'intérieur d'une pluralité de pointes saillantes (13) tournées vers ledit récipient (3) pour augmenter le champ électrique avec ledit capuchon (2) associé à ladite première électrode (6).

9. Appareil (1) selon la revendication 5, **caractérisé en ce qu'**il comprend des premiers moyens de renversement (22) susceptibles de renverser ledit récipient (3) d'une position droite (D), dans laquelle il repose sur la base d'appui, à ladite position au moins partiellement renversée (R), dans laquelle il est associé à ladite première électrode (6) ; moyens d'avance (23) aptes à déplacer ledit récipient (3) sur ladite position au moins partiellement renversée (R), avec guidage le long d'une course opérationnelle (L) ; ladite deuxième électrode (7) en contact avec ladite partie élargie (8) dudit récipient (3) sur ladite position au moins partiellement renversée (R), pour au moins une partie de mesure (T) de ladite course opérationnelle (L) dans laquelle ledit générateur d'impulsions (10) alimente lesdites électrodes (6, 7) avec lesdites impulsions de tension et ledit dispositif de mesure (11) mesure lesdits passages de courant entre lesdites électrodes (6, 7) ; deuxièmes moyens de renversement (24), susceptibles de renverser ledit récipient (3) de ladite position a moins partiellement renversée (R), dans laquelle il est associé à ladite première électrode (6) à ladite position droite (D), dans laquelle il repose sur son fond.

10. Appareil selon la revendication 9, **caractérisé en ce que** lesdits moyens d'avance (23) comprennent une bande transporteuse (60), laquelle est configurée pour avancer en phase avec l'avance desdits récipients (3) et monte fixées à distance égale entre elles lesdites premières électrodes (6) susceptibles de s'accoupler avec les têtes desdits récipients (3) le long de ladite course opérationnelle (L).

11. Appareil (3) selon la revendication 9, **caractérisé en ce que** ladite première électrode (6) réalise un contact glissant avec une électrode fixe (26) solidaire de la structure de support dudit appareil (1) pour au moins une partie de mesure (T) de ladite course opérationnelle (L) dudit récipient (3) qui avance sur ladite position au moins partiellement renversée (R).

12. Appareil (3) selon la revendication 9, **caractérisé en ce que** ladite deuxième électrode (7) est constituée d'une plaque ou lame allongée de matériau conducteur, fixe par rapport audit récipient (3) qui avance et glissant en contact de ladite partie élargie (8) dudit récipient (3) pour au moins ladite partie de mesure (T) de ladite course opérationnelle (L) dudit récipient (3) qui avance sur ladite position au moins partiellement renversée (R).

13. Appareil (1) selon la revendication 9, **caractérisé en ce qu'**il comprend au moins une première étoile (27), en particulier avec axe de rotation vertical, placée à intercepter ladite course opérationnelle, dotée d'une pluralité d'alvéoles (28), lesquelles reçoivent à leur intérieur lesdits récipients (3) qui avancent sur ladite position au moins partiellement renversée (R) le long de ladite course opérationnelle (L) ; lesdites alvéoles (28) montant à l'intérieur lesdites deuxièmes électrodes (7), électriquement connectées avec ledit générateur d'impulsions (10) au moyen de contacts glissants et susceptibles d'entrer en contact avec ladite position élargie (8) dudit récipient (3) pour ladite partie de mesure (T) de ladite course opérationnelle (L).

14. Appareil (1) selon la revendication 9, **caractérisé en ce qu'**il comprend au moins une paire de deuxièmes étoiles (90), en particulier avec axe de rotation horizontale, placée à intercepter ladite course opérationnelle (L), chacune de ladite deuxième étoile (90) étant dotée d'une pluralité de deuxièmes alvéoles (91), lesquelles reçoivent à l'intérieur les capuchons (2) desdits récipients (3) qui avancent sur ladite position au moins partiellement renversée (R) le long de ladite course opérationnelle (L) ; lesdites deuxièmes alvéoles (91) montant à l'intérieur lesdites premières électrodes (6), susceptibles de s'accoupler entre elles pour former un anneau essentiellement fermé autour dudit capuchon (2) pour au moins ladite partie de mesure de ladite course opérationnelle (L).
